(19) **Europäisches Patentamt / European Patent Office / Office européen des brevets**

(11) **EP 4 782 986 A1**

(12) **EUROPEAN PATENT APPLICATION**
published in accordance with Art. 153(4) EPC

(43) Date of publication:
**29.07.2026 Bulletin 2026/31**

(21) Application number: **24876098.5**

(22) Date of filing: **19.06.2024**

(51) International Patent Classification (IPC):
**G06F 7/523** (2006.01)

(52) Cooperative Patent Classification (CPC):
**G06F 7/523; G06F 17/16**

(86) International application number:
**PCT/CN2024/100201**

(87) International publication number:
**WO 2025/077275 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 CN 202311323154**

(71) Applicant: **HUAWEI TECHNOLOGIES CO., LTD.**
**Shenzhen 518129 (CN)**

(72) Inventors:
- **CHENG, Qian**
  **Shenzhen, Guangdong 518129 (CN)**
- **YING, Wei**
  **Shenzhen, Guangdong 518129 (CN)**
- **WANG, Jinting**
  **Shenzhen, Guangdong 518129 (CN)**
- **HE, Yu**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYNOMIAL CALCULATION METHOD AND DEVICE**

(57) A polynomial calculation method and apparatus are provided. The method includes: obtaining a plurality of to-be-calculated polynomials in a polynomial calculation application; dividing the plurality of to-be-calculated polynomials to obtain a plurality of to-be-calculated groups, where the plurality of to-be-calculated groups include a first to-be-calculated group; loading a common variable, a variable coefficient, and a reference variable that correspond to at least one to-be-calculated polynomial in the first to-be-calculated group respectively to at least one first register group, at least one second register group, and at least one third register group; controlling outer product calculation to be performed on the common variable in the at least one first register group and the variable coefficient in the at least one second register group, to obtain a first result; and controlling inner product calculation to be performed on the first result and the reference variable in the at least one third register group, to obtain a second result. According to the foregoing method, polynomial calculation may be converted into matrix calculation between register groups, improving a calculation speed.

FIG. 2

**Description**

CROSS-REFERENCE TO RELATED APPLICATIONS

This application claims priority to Chinese Patent Application No. 202311323154.X, filed with the China National Intellectual Property Administration on October 12, 2023 and entitled "POLYNOMIAL CALCULATION METHOD AND APPARATUS", which is incorporated herein by reference in its entirety.

TECHNICAL FIELD

This application relates to the field of chip technologies, and in particular, to a polynomial calculation method and apparatus.

BACKGROUND

In mathematics, a polynomial (polynomial) includes a sum/difference of a plurality of monomials, where each monomial is an expression formed by a variable, a variable coefficient, and multiplication and exponentiation (nonnegative integer power) operations therebetween. At present, polynomial calculation typically involves calculating the value of each monomial and then obtaining a result of the polynomial based on the sum/difference of the plurality of monomials. When a large quantity of polynomials need to be calculated, the foregoing calculation approach causes significant time overheads. Improving polynomial calculation efficiency is an urgent problem to be addressed.

SUMMARY

This application provides a polynomial calculation method and apparatus, to improve a polynomial calculation speed.
According to a first aspect, this application provides a polynomial calculation method. The method may be performed by a device (for example, a compute device) having a data processing function, or may be performed by a component (for example, a processor) in the device. The compute device is used as an example. In the method, a plurality of to-be-calculated polynomials in a polynomial calculation application are obtained. The plurality of to-be-calculated polynomials are divided to obtain a plurality of to-be-calculated groups, where each to-be-calculated group includes at least one to-be-calculated polynomial, the at least one to-be-calculated polynomial in each to-be-calculated group has a same variable coefficient, the plurality of to-be-calculated groups include a first to-be-calculated group, and the first to-be-calculated group is any to-be-calculated group in the plurality of to-be-calculated groups. A respective common variable, a respective variable coefficient, and a respective reference variable that correspond to each of at least one to-be-calculated polynomial in the first to-be-calculated group are determined. The respective common variable corresponding to each of the at least one to-be-calculated polynomial is loaded to at least one first register group, the respective variable coefficient corresponding to each of the at least one to-be-calculated polynomial is loaded to at least one second register group, and the respective reference variable corresponding to each of the at least one to-be-calculated polynomial is loaded to at least one third register group. Outer product calculation is controlled to be performed on the common variable in the at least one first register group and the variable coefficient in the at least one second register group, to obtain a first result corresponding to each of the at least one to-be-calculated polynomial. Inner product calculation is controlled to be performed on the first result corresponding to each of the at least one to-be-calculated polynomial and the reference variable in the at least one third register group, to obtain a second result corresponding to each of the at least one to-be-calculated polynomial. When a large number of polynomials are calculated, according to the foregoing method, polynomial cyclic calculation may be converted into matrix calculation between register groups, improving a calculation speed.
In a possible design, the determining the common variable, the variable coefficient, and the reference variable that correspond to the at least one to-be-calculated polynomial in the first to-be-calculated group may include: performing the following steps for a first polynomial in the at least one to-be-calculated polynomial, where the first polynomial is any polynomial in the at least one to-be-calculated polynomial: extracting, from the first polynomial, M $N^{th}$-degree polynomials and M reference variables corresponding to the M $N^{th}$-degree polynomials, where the M $N^{th}$-degree polynomials are in one-to-one correspondence with the M reference variables, each $N^{th}$-degree polynomial includes N common variables and N variable coefficients, the N common variables are in one-to-one correspondence with the N variable coefficients, the N common variables included in each of the M $N^{th}$-degree polynomials are the same as those included in another one in the M $N^{th}$-degree polynomials, M is a positive integer, and N is an integer greater than 1; and determining the N common variables and M*N variable coefficients based on the M $N^{th}$-degree polynomials.
In a possible design, before the extracting, from the first polynomial, the M $N^{th}$-degree polynomials and the M reference variables corresponding to the M $N^{th}$-degree polynomials, the method may further include: when it is determined that orders of monomials included in the first polynomial are non-consecutive, supplementing the first polynomial with a monomial corresponding to a missing degree, where a variable coefficient of the monomial corresponding to the missing degree is zero. According to this design, a supplemented first polynomial may be obtained, where orders of monomials in the supplemented first polynomial are consecutive. This facilitates subsequent polynomial calculation.

In a possible design, before the extracting, from the first polynomial, the M $N^{th}$-degree polynomials and the M reference variables corresponding to the M $N^{th}$-degree polynomials, the method may further include: when it is determined that a number of monomials included in the first polynomial is odd, supplementing the first polynomial with an odd number of monomials, where variable coefficients of the odd number of monomials are all zero. According to this design, a supplemented first polynomial may be obtained, where orders of monomials in the supplemented first polynomial are consecutive, and a number of the monomials is even. This facilitates subsequent polynomial calculation.

In a possible design, the extracting, from the first polynomial, the M $N^{th}$-degree polynomials and the M reference variables corresponding to the M $N^{th}$-degree polynomials may include: first using every N monomials of adjacent orders in the first polynomial as one second polynomial, to obtain M second polynomials; then, determining respective ratios of a $k^{th}$ variable included in each of the M second polynomials to a $k^{th}$ variable included in a second polynomial of a lowest degree, as M reference variables corresponding to the M second polynomials, where k is a nonnegative integer less than N; and finally, determining ratios of each of the M second polynomials to the corresponding reference variables as the M $N^{th}$-degree polynomials. According to this design, a method for obtaining the M $N^{th}$-degree polynomials and the M reference variables is provided.

In a possible design, the loading the respective common variable corresponding to each of the at least one to-be-calculated polynomial to the at least one first register group, loading the respective variable coefficient corresponding to each of the at least one to-be-calculated polynomial to the at least one second register group, and loading the respective reference variable corresponding to each of the at least one to-be-calculated polynomial to the at least one third register group may include: performing the following steps for the first polynomial in the at least one to-be-calculated polynomial, where the first polynomial is any polynomial in the at least one to-be-calculated polynomial: loading the N common variables corresponding to the first polynomial to a first destination register group, where the first destination register group is any one of the at least one first register group; loading the M*N variable coefficients corresponding to the first polynomial to a second destination register group, where the second destination register group is any one of the at least one second register group; and loading the M reference variables corresponding to the first polynomial to a third destination register group, where the third destination register group is any one of the at least one third register group.

In a possible design, the first destination register group includes a plurality of first registers, and each first register includes a plurality of storage locations. The loading the N common variables corresponding to the first polynomial to the first destination register group may include: loading an $i^{th}$ common variable in the N common variables to a $j^{th}$ storage location in a $(b+i)^{th}$ first register in the first destination register group, where i is an integer in [0, N-1], j is a nonnegative integer, and b is a nonnegative integer. According to this design, a method for loading the common variable is provided.

In a possible design, the second destination register group includes a plurality of second registers, and each second register includes a plurality of storage locations. The loading the M*N variable coefficients corresponding to the first polynomial to the second destination register group may include: loading an $i^{th}$ variable coefficient corresponding to an $m^{th}$ $N^{th}$-degree polynomial in the M $N^{th}$-degree polynomials to a $(b+m)^{th}$ storage location in a $(b+i)^{th}$ second register in the second destination register group, where m is an integer in [0, M-1], i is an integer in [0, N-1], and b is a nonnegative integer. According to this design, a method for loading the variable coefficient is provided.

In a possible design, the third destination register group includes a plurality of third registers, and each third register includes a plurality of storage locations. The loading the M reference variables corresponding to the first polynomial to the third destination register group may include: loading an $m^{th}$ reference variable in the M reference variables to a $j^{th}$ storage location in a $(b+m)^{th}$ third register in the third destination register group, where m is an integer in [0, M-1], b is a nonnegative integer, and j is a nonnegative integer. According to this design, a method for loading the reference variable is provided.

In a possible design, the controlling outer product calculation to be performed on the common variable in the at least one first register group and the variable coefficient in the at least one second register group, to obtain the first result corresponding to each of the at least one to-be-calculated polynomial may include: performing the following step for the first polynomial in the at least one to-be-calculated polynomial, where the first polynomial is any polynomial in the at least one to-be-calculated polynomial: controlling outer product calculation to be performed on the common variable in the first destination register group and the variable coefficient in the second destination register group, to obtain a first result corresponding to the first polynomial.

In a possible design, the controlling inner product calculation to be performed on the first result corresponding to each of the at least one to-be-calculated polynomial and the reference variable in the at least one third register group, to obtain the second result corresponding to each of the at least one to-be-calculated polynomial may include: performing the following step for the first polynomial in the at least one to-be-calculated polynomial, where the first polynomial is any polynomial in the at least one to-be-calculated polynomial: controlling inner product calculation to be performed on the first result corresponding to the first polynomial and the reference variable in the third destination register group, to obtain a second result corresponding to the first polynomial.

According to a second aspect, an embodiment of this application provides a polynomial calculation apparatus. The apparatus has a function of implementing a behavior of the compute device in any one of the first aspect and the possible implementation method examples of the first aspect. For beneficial effects, refer to the descriptions of the first aspect. Details are not described herein again. The function may be implemented by hardware, or may be implemented by executing corresponding software by hardware. The hardware or the software includes one or more modules corresponding to the foregoing function. In a possible design, a structure of the apparatus includes an obtaining module and a processing module. These modules may have functions of performing the behavior of the compute device in any one of the first aspect and the possible implementation method examples of the first aspect. For details, refer to the detailed descriptions in the method examples. Details are not described herein.

According to a third aspect, an embodiment of this application provides a compute device. The compute device has a function of implementing a behavior of the compute device in any one of the first aspect and the possible implementation method examples of the first aspect. For beneficial effects, refer to the descriptions of the first aspect. Details are not described herein again. A structure of the compute device includes a processor and a storage. The processor is configured to support an apparatus in performing a corresponding function of the compute device in the method examples in the first aspect. The storage is coupled to the processor, and stores program instructions and data that are necessary for a communication apparatus. The structure of the communication apparatus further includes a communication interface, configured to communicate with another device.

According to a fourth aspect, this application further provides a computer-readable storage medium. The computer-readable storage medium stores instructions. When the instructions are run on a computer, the computer is enabled to perform the method in the first aspect and the possible implementations of the first aspect, or the computer is enabled to perform the method in the first aspect and the possible implementations of the first aspect.

According to a fifth aspect, this application further provides a computer program product including instructions. When the computer program product runs on a computer, the computer is enabled to perform the method in the first aspect and the possible implementations of the first aspect, or the computer is enabled to perform the method in the first aspect and the possible implementations of the first aspect.

According to a sixth aspect, this application further provides a computer chip. The chip is connected to a storage. The chip is configured to read and execute a software program stored in the storage, to perform the method in the first aspect and the possible designs of the first aspect, or to enable a computer to perform the method in the first aspect and the possible implementations of the first aspect.

BRIEF DESCRIPTION OF DRAWINGS

FIG. 1 is a diagram of a structure of a compute device according to an embodiment of this application;
FIG. 2 is a schematic flowchart of a polynomial calculation method according to an embodiment of this application;
FIG. 3 is a schematic flowchart of a polynomial calculation method according to an embodiment of this application;
FIG. 4 is a diagram of a structure of a first register group according to an embodiment of this application;
FIG. 5 is a diagram of a structure of a first register group according to an embodiment of this application;
FIG. 6 is a diagram of a structure of a second register group according to an embodiment of this application;
FIG. 7 is a diagram of a structure of a second register group according to an embodiment of this application;
FIG. 8 is a diagram of a structure of a third register group according to an embodiment of this application;
FIG. 9 is a diagram of a structure of a third register group according to an embodiment of this application;
FIG. 10 is a diagram of a structure of a first register group according to an embodiment of this application;
FIG. 11 is a diagram of a structure of a second register group according to an embodiment of this application;
FIG. 12 is a diagram of a structure of a third register group according to an embodiment of this application;
FIG. 13 is a diagram of a structure of a fourth register group according to an embodiment of this application;
FIG. 14 is a diagram of a structure of a fourth register group according to an embodiment of this application;
FIG. 15 is a diagram of a structure of a fifth register group according to an embodiment of this application;
FIG. 16 is a diagram of a structure of a fifth register group according to an embodiment of this application; and
FIG. 17 is a diagram of a structure of a compute device according to an embodiment of this application.

DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

To better explain embodiments of this application, related terms or technologies in this application are first explained.

**1. Row vector**

The row vector is a $1\times p$ matrix, where p is any positive integer, for example, $x=[x_1\ x_2\ ...\ x_p]$.

**2. Column vector**

The column vector is a $q\times 1$ matrix, where q is any positive integer, for example, $\mathrm{x}=\begin{bmatrix} x_1 \\ x_2 \\ ... \\ x_q \end{bmatrix}$.

**3. Matrix size/scale**

A $p\times q$ matrix is a rectangular array formed by arranging p rows and q columns of elements. An example is as follows:

$$A=\begin{bmatrix} A_{11} & A_{12} & ... & A_{1q} \\ A_{21} & A_{22} & ... & A_{2q} \\ ... & ... & ... & ... \\ A_{p1} & A_{p2} & ... & A_{pq} \end{bmatrix}$$

Each number that constitutes a matrix is referred to as an element in the matrix. For example, $A_{11}, A_{12}, ...,$ and $A_{pq}$ are all elements in the matrix A. A subscript (or referred to as coordinates) of an element indicates a location of the element in the matrix, and may be a row index (or referred to as a row coordinate) or a column index (or referred to as a column coordinate) of the element in the matrix. For example, a subscript "11" of $A_{11}$ indicates that the element is located in a 1st row and a 1st column of the matrix A, and $A_{21}$ indicates that the element is located in a 2nd row and the 1st column of the matrix A. In addition, the subscript of the element may alternatively have a different representation form. For example, $A_{11}$ may alternatively be written as $A_{1,1}$, and $A_{21}$ may alternatively be written as $A_{2,1}$. Similar parts are not described in the following.

It should be noted that a row index of a start row of a matrix is not limited to 1, and may alternatively be another value like 0. Similarly, a column index of a start column of the matrix is not limited to 1, and may alternatively be other data like 0. For example, if the row index of the start row and the column index of the start column of the matrix are 0 and 0, a subscript of an initial element in the matrix is "00", indicating that the element is in a 0th row and a 0th column of the matrix.

**4. Matrix addition (matrix addition)**

Matrix addition means adding two matrices with a same scale (or referred to as a same size, that is, the two matrices have a same number of rows (rows) and a same number of columns (columns)). For example, both A and B are $p\times q$ matrices, and a matrix C=A+B.

$$A=\begin{bmatrix} A_{11} & A_{12} & ... & A_{1q} \\ A_{21} & A_{22} & ... & A_{2q} \\ ... & ... & ... & ... \\ A_{p1} & A_{p2} & ... & A_{pq} \end{bmatrix} \quad B=\begin{bmatrix} B_{11} & B_{12} & ... & B_{1q} \\ B_{21} & B_{22} & ... & B_{2q} \\ ... & ... & ... & ... \\ B_{p1} & B_{p2} & ... & B_{pq} \end{bmatrix}$$

$$C=A+B=\begin{bmatrix} A_{11}+B_{11} & A_{12}+B_{12} & ... & A_{1q}+B_{1q} \\ A_{21}+B_{21} & A_{22}+B_{22} & ... & A_{2q}+B_{2q} \\ ... & ... & ... & ... \\ A_{p1}+B_{p1} & A_{p2}+B_{p2} & ... & A_{pq}+B_{pq} \end{bmatrix}$$

Similarly, matrix subtraction means subtracting elements at each same location in the two matrices with the same scale from each other.

## 5. Matrix multiplication (matrix multiplication)

For two matrices (for example, matrices D and E) to be multiplied, a number of columns of D needs to be the same as a number of rows of E. For example, if D is a p×q matrix and E is a q×s matrix, a product of D and E is a p×s matrix. An example is as follows:

$$D==\begin{bmatrix} a_{11} & a_{12} & a_{13} \\ a_{21} & a_{22} & a_{23} \end{bmatrix} \quad E=\begin{bmatrix} b_{11} & b_{12} \\ b_{21} & b_{22} \\ b_{31} & b_{32} \end{bmatrix}$$

$$F=DE=\begin{bmatrix} a_{11}b_{11} + a_{12}b_{21} + a_{13}b_{31} & a_{11}b_{12} + a_{12}b_{22} + a_{13}b_{32} \\ a_{21}b_{11} + a_{22}b_{21} + a_{23}b_{31} & a_{21}b_{12} + a_{22}b_{22} + a_{23}b_{32} \end{bmatrix}$$

The following describes in detail the technical solutions provided in embodiments of this application with reference to the accompanying drawings.

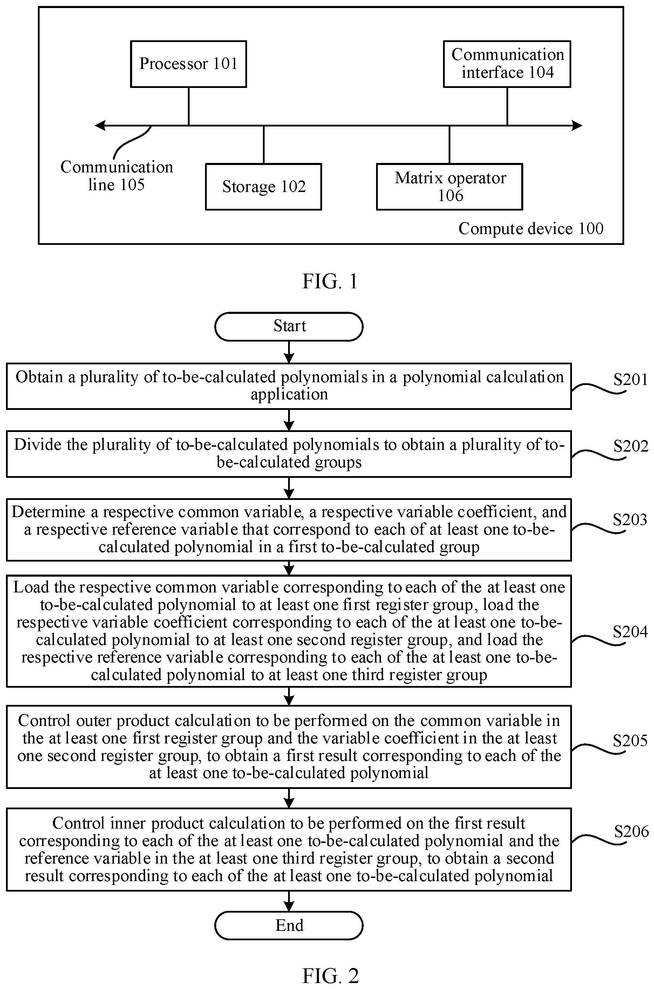

FIG. 1 is a diagram of a compute device according to this application. The compute device 100 includes a processor 101 and a storage 102. Optionally, the compute device 100 may further include a communication interface 104 and a matrix operator 106. The processor 101, the storage 102, the matrix operator 106, and the communication interface 104 may be connected to each other through a communication line 105. The communication line 105 may be a peripheral component interconnect (peripheral component interconnect, PCI for short) bus, an extended industry standard architecture (extended industry standard architecture, EISA for short) bus, or the like. The communication line 105 may be classified into an address bus, a data bus, a control bus, and the like. For ease of representation, only one bold line is used for representation in FIG. 1, but this does not mean that there is only one bus or one type of bus.

The processor 101 may be a central processing unit (central processing unit, CPU), an application-specific integrated circuit (application-specific integrated circuit, ASIC), a field programmable gate array (field programmable gate array, FPGA), an artificial intelligence (artificial intelligence, AI) chip, a system on a chip (system on a chip, SoC) or complex programmable logic device (complex programmable logic device, CPLD), a graphics processing unit (graphics processing unit, GPU), a neural network processing module (neural network processing unit, NPU), a microprocessor, one or more integrated circuits configured to control program execution of the solutions of this application, or the like.

It should be noted that FIG. 1 shows only one processor 101. In actual application, there may be a plurality of processors 101. The plurality of processors 101 may include a plurality of processors of a same type, or may include a plurality of processors of different types. For example, the plurality of processors 101 include a plurality of CPUs. For another example, the plurality of processors 101 include at least one CPU, at least one GPU, and the like. One CPU further has one or more CPU cores. A number of processors 101, a number of CPU cores, and the like are not limited in this embodiment.

Specifically, the processor 101 is configured to process a data access request from outside (for example, another compute device) of the compute device 100, and is also configured to process a request generated inside the compute device 100. For example, the request is a data write request, and the data write request includes a polynomial. After receiving the data write request, the processor 101 may perform a polynomial calculation method provided in embodiments of this application, to process the polynomial and store processed data in the storage 102. For another example, the request may be a data read request, the data read request is used to request to read polynomial data, and the polynomial data may include a part or all of the polynomial. After receiving the data read request, the processor 101 reads the polynomial data from the storage 102.

In addition, the processor 101 is further configured to perform other data calculation or processing, for example, a matrix operation. This is not specifically limited. Optionally, the matrix operation may alternatively be allocated to the matrix operator 106 for execution. In some cases, when the processor 101 has a plurality of cores, the compute device 100 includes the plurality of processors 101, or the compute device 100 includes a plurality of matrix operators 106, the plurality of cores, the plurality of processors 101, or the plurality of matrix operators 106 may perform the matrix operation in parallel. Details are not emphasized herein.

The matrix operator 106 may be configured to process the matrix operation. Refer to the foregoing descriptions of the matrix operations. Details are not described herein again. The matrix operator 106 may include but is not limited to a vector processor (vector processor, VP), a vector processor system (vector processor system, VPS), a matrix processor, a matrix accelerator, and the like. This is not specifically limited.

The communication interface 104 uses any apparatus like a transceiver, and is configured to communicate with another device or a communication network such as an Ethernet, a radio access network (radio access network, RAN), a wireless local area network (wireless local area network, WLAN), or a wired access network, for example, obtain a data read request and a data write request.

The storage 102 is configured to store data and computer-executable program code. For example, the data includes but is not limited to polynomial data. The executable program code may include program code of the polynomial calculation method provided in embodiments of this application. The processor 101 executes the executable program code to implement the polynomial calculation method provided in this embodiment. In other words, the storage 102 stores computer-executable instructions for executing the solutions of this application, and the processor 101 controls the execution. The processor 101 is configured to execute the computer-executable instructions stored in the storage 102, to implement the polynomial calculation method provided in the foregoing embodiments of this application.

The storage 102 may exist independently, and is connected to the processor through the communication line 105. Alternatively, the storage 102 may be integrated with the processor. Specifically, for example, the storage 102 may include a memory, and may further include a hard disk. The memory is an internal storage that directly exchanges data with the processor 101. Data can be read and written in the memory at a high speed at any time, and the memory serves as a temporary data storage of an operating system or another running program. Different from the memory, the hard disk has a lower speed of reading and writing data than the memory, and is usually configured to store data persistently. In some application scenarios, the processor 101 may temporarily store data in the memory. When a total amount of data in the memory reaches a specific threshold, the processor 101 sends the data stored in the memory to the hard disk for persistent storage. The data may be obtained from an external device, input by a user, or generated by the compute device 100. This is not specifically limited. Alternatively, the processor 101 reads the data from the memory. When the memory is not hit, the processor 101 reads the data from the hard disk into the memory, and then reads the data from the memory.

The memory includes at least two types of storages. For example, the memory may be a random access memory, or may be a read-only memory (read-only memory, ROM). For example, the random access memory is a dynamic random access memory (dynamic random access memory, DRAM) or a storage class memory (storage class memory, SCM). The memory may further include another random access memory, for example, a static random access memory (static random access memory, SRAM). The read-only memory may be, for example, a programmable read-only memory (programmable read-only memory, PROM) or an erasable programmable read-only memory (erasable programmable read-only memory, EPROM). In addition, the memory may alternatively be a dual in-line memory module or a dual-line memory module (dual in-line memory module, DIMM), that is, a module including DRAMs. In actual application, a plurality of memories and different types of memories may be configured in the compute device 100. A number of memories and a type of the memory are not limited in this embodiment.

The hard disk may be specifically a magnetic disk or another type of storage medium, for example, a solid state disk (solid state drive/solid state disk, SSD), a hard disk (hard disk, HDD), a shingled magnetic recording compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, this is not limited thereto.

It should be noted that the structure of the compute device 100 shown in FIG. 1 is merely an example. In actual application, the compute device 100 may have more or fewer components. For example, the compute device 100 may further include input/output devices such as a keyboard, a mouse, and a display. This is not limited in embodiments of this application.

The following describes in detail the polynomial calculation method provided in embodiments of this application by using an example in which the polynomial calculation method is applied to the compute device shown in FIG. 1.

FIG. 2 is a schematic flowchart corresponding to a polynomial calculation method according to an embodiment of this application. The method may be performed by a compute device (for example, the compute device 100) having a data processing capability, or may be performed by a component, for example, the processor 101 or the matrix operator 106, of the compute device. For ease of description, the following uses the compute device 100 as an example for description. As shown in FIG. 2, the method includes the following steps.

S201: Obtain a plurality of to-be-calculated polynomials in a polynomial calculation application.

In this embodiment of this application, the to-be-calculated polynomial includes one basic variable. The to-be-calculated polynomial includes at least two monomials. Each monomial in the to-be-calculated polynomial includes the same basic variable. The to-be-calculated polynomial may include a sum/difference of the at least two monomials, where each monomial is an expression obtained by using a basic variable, a variable coefficient, and multiplication and power (nonnegative integer power) operations therebetween.

For example, the to-be-calculated polynomial is $a_1x^1 + a_2x^2 + a_4x^4$, where $a_1x^1$, $a_2x^2$, and $a_4x^4$ are all monomials, $a_1$, $a_2$, and $a_4$ are variable coefficients, and $x$ is a basic variable. $a_1$, $a_2$, $a_4$, and $x$ each may be any known value.

For ease of description in the following, when the to-be-calculated polynomial includes the sum/difference of the at least two monomials, the to-be-calculated polynomial may be adjusted, so that the adjusted to-be-calculated polynomial includes the sum of the at least two monomials. The adjusted to-be-calculated polynomial facilitates subsequent polynomial calculation. For example, the to-be-calculated polynomial is $2x^1 + 3x^2 - 4x^3$, the to-be-calculated polynomial may be adjusted, and the adjusted to-be-calculated polynomial is $2x^1 + 3x^2 + (-4x^3)$.

S202: Divide the plurality of to-be-calculated polynomials to obtain a plurality of to-be-calculated groups.

In this embodiment of this application, to-be-calculated polynomials with a same variable coefficient may be grouped into one to-be-calculated group. Each to-be-calculated group includes at least one to-be-calculated polynomial, and the at least one to-be-calculated polynomial in each to-be-calculated group has a same variable coefficient.

The plurality of to-be-calculated groups include a first to-be-calculated group, where the first to-be-calculated group is any to-be-calculated group in the plurality of to-be-calculated groups. The following uses the first to-be-calculated group as an example for description.

S203: Determine a respective common variable, a respective variable coefficient, and a respective reference variable that correspond to each of at least one to-be-calculated polynomial in the first to-be-calculated group.

In this embodiment of this application, the at least one to-be-calculated polynomial includes a first polynomial, where the first polynomial is any polynomial in the at least one to-be-calculated polynomial. The following uses the first polynomial as an example for description.

Before a common variable, a variable coefficient, and a reference variable that correspond to the first polynomial are determined, whether degrees of monomials included in the first polynomial are consecutive may be first determined. When it is determined that the degrees of the monomials included in the first polynomial are non-consecutive, the first polynomial is supplemented with a monomial corresponding to a missing degree, where a variable coefficient of the monomial corresponding to the missing degree is zero. Then, it is determined whether a number of monomials included in the first polynomial is odd. When it is determined that the number of monomials included in the first polynomial is odd, the first polynomial is supplemented with an odd number of monomials, where variable coefficients of the odd number of monomials are all zero. After the first polynomial is supplemented with the odd number of monomials, degrees of monomials included in a supplemented first polynomial are still consecutive. In the foregoing manner, the supplemented first polynomial may be obtained, where the degrees of the monomials in the supplemented first polynomial are consecutive, and a number of the monomials is even. This facilitates subsequent polynomial calculation.

It should be understood that to improve a speed of subsequent polynomial calculation, when it is determined that the number of monomials included in the first polynomial is odd, the first polynomial is supplemented with one monomial, where a variable coefficient of the monomial supplemented is zero. For ease of subsequent discussion, the following uses an example in which the first polynomial is supplemented with one monomial for description.

For example, if the obtained first polynomial is $a_1x^1 + a_3x^3$, and degrees of two monomials included in the first polynomial are 1 and 3, the degrees of the two monomials are non-consecutive, and a second-degree monomial is missing. Therefore, the first polynomial is supplemented with the second-degree monomial, to update the first polynomial to $a_1x^1 + a_2x^2 + a_3x^3$, where $a_2$ is 0.

The first polynomial $a_1x^1 + a_2x^2 + a_3x^3$ includes three monomials, a number of the monomials included is odd, and $a_1x^1 + a_2x^2 + a_3x^3$ may be supplemented with one monomial. In one case, $a_1x^1 + a_2x^2 + a_3x^3$ may be supplemented with $a_0x^0$, to update the first polynomial to $a_0x^0 + a_1x^1 + a_2x^2 + a_3x^3$, where $a_0$ is 0. In another case, $a_1x^1 + a_2x^2 + a_3x^3$ may be supplemented with $a_4x^4$, to update the first polynomial to $a_1x^1 + a_2x^2 + a_3x^3 + a_4x^4$, where $a_4$ is 0.

When it is determined that the degrees of the monomials in the first polynomial are consecutive and the number of the monomials is even, the following steps are performed: first extracting, from the first polynomial, M $N^{th}$-degree polynomials and M reference variables corresponding to the M $N^{th}$-degree polynomials, and then determining N common variables and M*N variable coefficients based on the M $N^{th}$-degree polynomials, where M is a positive integer, and N is an integer greater than 1.

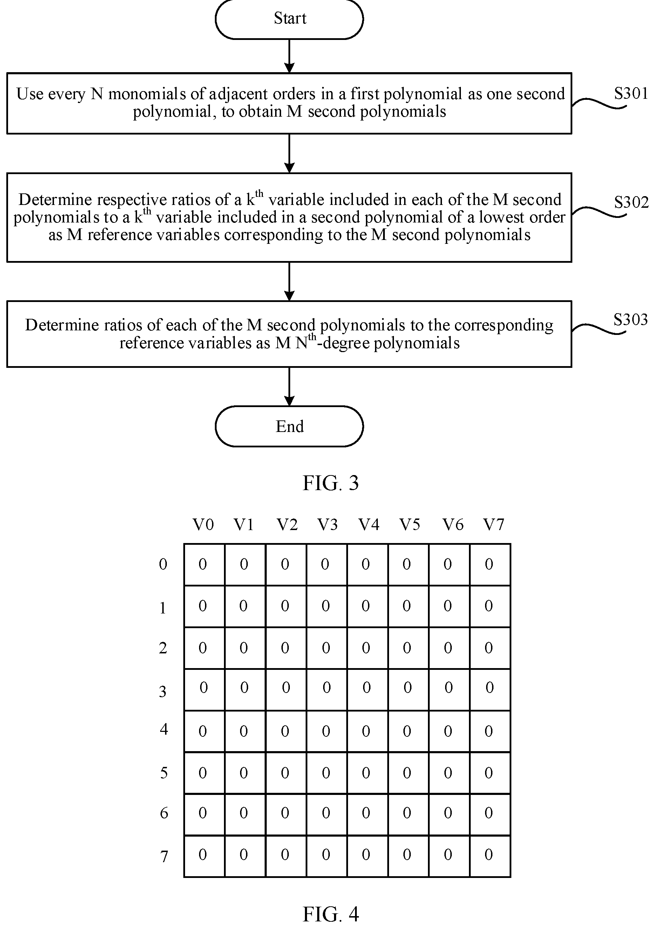

In this embodiment of this application, the M $N^{th}$-degree polynomials and the M reference variables corresponding to the M $N^{th}$-degree polynomials may be extracted from the first polynomial in the following possible implementations, which includes the following steps shown in FIG. 3.

S301: Use every N monomials of adjacent degrees in the first polynomial as one second polynomial, to obtain M second polynomials.

In this embodiment of this application, the number of monomials in the first polynomial is N*M, where N may be an integer greater than 1, N is less than the number of monomials in the first polynomial, M is a positive integer, and * represents multiplication. Details are not described below. For example, the first polynomial is $a_1x^1 + a_2x^2 + a_3x^3 + a_4x^4 + a_5x^5 + a_6x^6$, and N is set to 3. Based on the foregoing first polynomial, two second polynomials $a_1x^1 + a_2x^2 + a_3x^3$ and $a_4x^4 + a_5x^5 + a_6x^6$ may be obtained, where each second polynomial includes three monomials of adjacent degrees.

In this embodiment of this application, in a case in which the first polynomial is determined, numbers M of second polynomials obtained when N has different values are different. The value of N may be determined in the following two possible implementations.

In a first possible implementation, one of available values corresponding to N may be randomly selected as the value of N.

For example, if the available values of N are 2 and 3, 2 is randomly selected as the value of N.

In a second possible implementation, division results corresponding to available values of N are determined, where the division result includes the M second polynomials. Then, execution duration corresponding to different division results is determined, and a value corresponding to a division result with smallest execution duration is selected as the value of N. The execution duration corresponding to the division result includes execution duration required for obtaining results corresponding to the M second polynomials and execution duration required for obtaining a sum of the M second polynomials.

A result of each of the M second polynomials is obtained through inner product calculation. Therefore, execution duration required for obtaining the result of each second polynomial is duration corresponding to inner product calculation. Obtaining the sum of the M second polynomials requires M-1 accumulation operations. Therefore, the execution duration required for obtaining the sum of the M second polynomials is duration of M-1 accumulation operations. Specifically, the execution duration for obtaining the sum of the M second polynomials is equal to (M-1)*Duration of an accumulation operation.

For example, the first polynomial is $a_1x^1 + a_2x^2 + a_3x^3 + a_4x^4 + a_5x^5 + a_6x^6$, the number of monomials in the first polynomial is 6, and the available value of N is 2 or 3. It is set that duration corresponding to first inner product calculation is t1, where first inner product calculation may be understood as inner product calculation performed on two $2\times2$ matrices; duration corresponding to second inner product calculation is t2, where the second inner product calculation may be understood as inner product calculation performed on two $3\times3$ matrices; and the duration of an accumulation operation is t3.

When the value of N is 2, the first polynomial is divided to obtain a first division result, where the first division result includes three second polynomials, that is, $a_1x^1 + a_2x^2$, $a_3x^3 + a_4x^4$, and $a_5x^5 + a_6x^6$. A result of each second polynomial is obtained through inner product calculation. Therefore, execution duration required for obtaining the result of each second polynomial is t1, and execution duration required for obtaining the results of the foregoing three second polynomials is 3*t1. Obtaining a sum of the three second polynomials requires two accumulation operations. Therefore, execution duration for obtaining the sum of the three second polynomials is 2*t3. Consequently, execution duration corresponding to the first division result is equal to 3*t1+2*t3.

When the value of N is 3, the first polynomial is divided to obtain a second division result, where the second division result includes two second polynomials, that is, $a_1x^1 + a_2x^2 + a_3x^3$ and $a_4x^4 + a_5x^5 + a_6x^6$. A result of each second polynomial is obtained through inner product calculation. Therefore, execution duration required for obtaining the result of each second polynomial is t2, and execution duration required for obtaining the results of the foregoing two second polynomials is 2*t2. Obtaining a sum of the two second polynomials requires one accumulation operation. Therefore, execution duration for obtaining the sum of the two second polynomials is t3. Consequently, execution duration corresponding to the second division result is equal to 2*t2+t3.

The execution duration corresponding to the first division result is 3*t1+2*t3, and the execution duration corresponding to the second division result is 2*t2+t3. Based on comparison between the two pieces of execution duration, if 3*t1+2*t3 is less than 2*t2+t3, the value of N is 2; if 3*t1+2*t3 is greater than 2*t2+t3, the value of N is 3; or if 3*t1+2*t3 is equal to 2*t2+t3, the value of N is 2 or 3.

S302: Determine respective ratios of a $k^{th}$ variable included in each of the M second polynomials to a $k^{th}$ variable included in a second polynomial of a lowest degree, as M reference variables corresponding to the M second polynomials, where k is a nonnegative integer less than N.

S303: Determine ratios of each of the M second polynomials to the corresponding reference variables as the M $N^{th}$-degree polynomials.

In this embodiment of this application, it can be learned from the steps in FIG. 3 that the first polynomial may be decomposed into the M $N^{th}$-degree polynomials and the M reference variables, where the M $N^{th}$-degree polynomials are in one-to-one correspondence with the M reference variables.

For example, the first polynomial is $a_1x^1 + a_2x^2 + a_3x^3 + a_4x^4 + a_5x^5 + a_6x^6$, the number of monomials in the first polynomial is 6, N is set to 2, and three second polynomials are obtained from the first polynomial, that is, $a_1x^1 + a_2x^2$, $a_3x^3 + a_4x^4$, and $a_5x^5 + a_6x^6$. Each second polynomial includes two variables: a $0^{th}$ variable and a $1^{st}$ variable, that is, a value of k is 0 or 1. A second polynomial of a lowest degree is $a_1x^1 + a_2x^2$.

In this embodiment of this application, the value of k is 0 or 1. The following uses an example in which the value of k is 0 for description. For a $0^{th}$ second polynomial $a_1x^1 + a_2x^2$, a $0^{th}$ variable in the second polynomial is $x^1$, and the $0^{th}$ variable in the second polynomial $a_1x^1 + a_2x^2$ of the lowest degree is $x^1$. In this case, a reference variable corresponding to the $0^{th}$ second polynomial is $x^1/x^1 = 1$. A ratio $a_1x^1 + a_2x^2$ of the $0^{th}$ second polynomial $a_1x^1 + a_2x^2$ to the corresponding reference variable 1 is used as a $0^{th}$ second-degree polynomial.

For a $1^{st}$ second polynomial $a_3x^3 + a_4x^4$, a $0^{th}$ variable in the second polynomial is $x^3$, and the $0^{th}$ variable in the second polynomial $a_1x^1 + a_2x^2$ of the lowest degree is $x^1$. In this case, a reference variable corresponding to the $1^{st}$ second polynomial is $x^3/x^1 = x^2$. A ratio $a_3x^1 + a_4x^2$ of the $1^{st}$ second polynomial $a_3x^3 + a_4x^4$ to the corresponding reference variable

$x^2$ is used as a 1st second-degree polynomial.

For a 2nd second polynomial $a_5x^5 + a_6x^6$, a 0th variable in the second polynomial is $x^5$, and the 0th variable in the second polynomial $a_1x^1 + a_2x^2$ of the lowest degree is $x^1$. In this case, a reference variable corresponding to the 2nd second polynomial is $x^5/x^1 = x^4$. A ratio $a_5x^1 + a_6x^2$ of the 2nd second polynomial $a_5x^5 + a_6x^6$ to the corresponding reference variable $x^4$ is used as a 2nd second-degree polynomial.

In conclusion, the three second-degree polynomials extracted from the first polynomial $a_1x^1 + a_2x^2 + a_3x^3 + a_4x^4 + a_5x^5 + a_6x^6$ are $a_1x^1 + a_2x^2$, $a_3x^1 + a_4x^2$, and $a_5x^1 + a_6x^2$, and the three reference variables corresponding to the three second-degree polynomials are 1, $x^2$, and $x^4$. Therefore, the first polynomial $a_1x^1 + a_2x^2 + a_3x^3 + a_4x^4 + a_5x^5 + a_6x^6$ may be decomposed into the following structure:

$$a_1x^1 + a_2x^2 + a_3x^3 + a_4x^4 + a_5x^5 + a_6x^6 = 1 * (a_1x^1 + a_2x^2) + x^2 * (a_3x^1 + a_4x^2) + x^4 * (a_5x^1 + a_6x^2)$$

In this embodiment of this application, each Nth-degree polynomial includes N common variables and N variable coefficients, the N common variables are in one-to-one correspondence with the N variable coefficients, and the N common variables included in each of the M Nth-degree polynomials are the same as those included in another one in the M Nth-degree polynomials.

Based on the foregoing example, each second-degree polynomial includes two common variables $x^1$ and $x^2$. The 0th second-degree polynomial includes two common variables $x^1$ and $x^2$, and variable coefficients corresponding to the two common variables are $a_1$ and $a_2$. The 1st second-degree polynomial includes two common variables $x^1$ and $x^2$, and variable coefficients corresponding to the two common variables are $a_3$ and $a_4$. The 2nd second-degree polynomial includes common variables $x^1$ and $x^2$, and variable coefficients corresponding to the two common variables are $a_5$ and $a_6$.

S204: Load the respective common variable corresponding to each of the at least one to-be-calculated polynomial to at least one first register group, load the respective variable coefficient corresponding to each of the at least one to-be-calculated polynomial to at least one second register group, and load the respective reference variable corresponding to each of the at least one to-be-calculated polynomial to at least one third register group.

For the first polynomial in the at least one to-be-calculated polynomial, the following steps are performed: loading the N common variables corresponding to the first polynomial to a first destination register group, where the first destination register group is any one of the at least one first register group; loading the M*N variable coefficients corresponding to the first polynomial to a second destination register group, where the second destination register group is any one of the at least one second register group; and loading the M reference variables corresponding to the first polynomial to a third destination register group, where the third destination register group is any one of the at least one third register group.

In this embodiment of this application, the first register group includes a plurality of first registers, and each first register includes a plurality of storage locations. Generally, the first register group includes eight first registers. Each first register may store 512-bit (binary digit, bit) data. It is set that each first register includes eight storage locations. Therefore, each storage location in the first register may store 64-bit data. The first register may be a scalable vector extension (scalable vector extension, SVE) register.

As shown in FIG. 4, for ease of description in the following, each first register in the first register group may be numbered, and the eight first registers are respectively numbered V0, V1, V2, V3, V4, V5, V6, and V7. Each storage location in each first register may be further numbered, and the eight storage locations in each first register are respectively numbered 0, 1, 2, 3, 4, 5, 6, and 7. Each storage location in the first register group may be initialized to 0.

In a possible implementation, loading the N common variables corresponding to the first polynomial to the first destination register group may be implemented by using the following step: loading an ith common variable in the N common variables to a jth storage location in a $(b+i)$th first register in the first destination register group, where i is an integer in [0, N-1], j is a nonnegative integer, and b is a nonnegative integer. In this embodiment of this application, because the first register group includes the eight first registers, and each first register includes eight storage locations, a value of $(b+i)$ is any integer in a range of [0, 7], and a value of j is any integer in the range of [0, 7].

In this embodiment of this application, a loading manner of the N common variables corresponding to the first polynomial may include the following manners.

For a 0th common variable corresponding to the first polynomial, the 0th common variable may be loaded in the following manner. For example, the 0th common variable is directly obtained from the N common variables, and the 0th common variable is loaded to the first destination register group.

For another common variable corresponding to the first polynomial other than the 0th common variable, the another common variable may be loaded in the following two possible manners. In one possible manner, the another common variable is directly obtained from the N common variables, and the another common variable is loaded to the first destination register group. In the other possible manner, calculation is performed based on the 0th common variable in the first destination register group, to obtain the another common variable. For example, if the 0th common variable is $x^1$, and

the another common variable is $x^2$, after $x^1$ is loaded to the first destination register group, calculation is performed in the first destination register group, $x^1 * x^1$ is used as the common variable $x^2$, and $x^2$ obtained is added to the first destination register group.

For example, the first polynomial is $a_1x^1 + a_2x^2 + a_3x^3 + a_4x^4 + a_5x^5 + a_6x^6$, and three second-degree polynomials corresponding to the first polynomial are $a_1x^1 + a_2x^2$, $a_3x^1 + a_4x^2$, and $a_5x^1 + a_6x^2$. Three reference variables corresponding to the three second-degree polynomials are 1, $x^2$, and $x^4$.

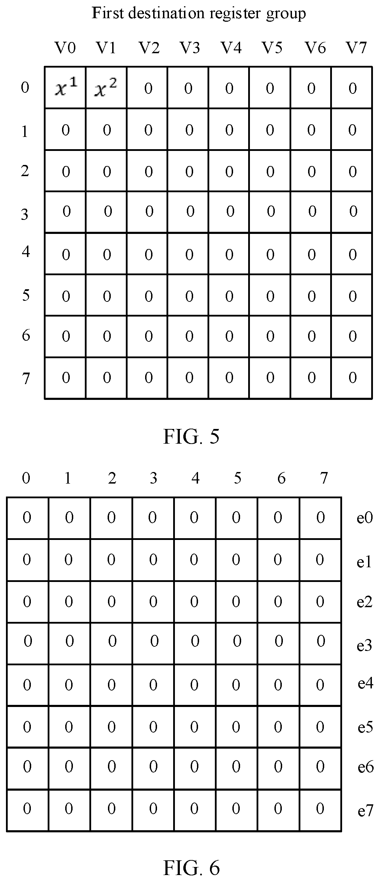

The three second-degree polynomials each include two common variables $x^1$ and $x^2$, where a 0th common variable is $x^1$, and a 1st common variable is $x^2$. It is set that j=0 and b=0. As shown in FIG. 5, the 0th common variable $x^1$ is loaded to a 0th storage location in a 0th (0+0=0) first register in the first destination register group, and the 1st common variable $x^2$ is loaded to a 0th storage location in a 1st (0+1=1) first register in the first destination register group. The 0th first register is a first register V0, and the 1st first register is a first register V1.

It should be understood that common variables in storage locations in the (b+i)th first register in the first destination register group should correspond to a same variable coefficient. When common variables correspond to a same variable coefficient, the common variables corresponding to the same variable coefficient may be loaded to different storage locations in a same first register. For example, the common variable $x^1$ is stored in the 0th storage location in the 0th first register in the first destination register group, and a corresponding variable coefficient is $a_1$. A common variable $y^1$ is stored in a 1st storage location in the 0th first register in the first destination register group, and a corresponding variable coefficient is still $a_1$. The common variables $x^1$ and $y^1$ correspond to the same variable coefficient.

In this embodiment of this application, the second register group includes a plurality of second registers, and each second register includes a plurality of storage locations. Generally, the second register group includes eight second registers. Each second register may store 512-bit data. It is set that each second register includes eight storage locations. Therefore, each storage location in the second register may store 64-bit data. The second register may be a scalable matrix extension (scalable matrix extension, SME) register.

As shown in FIG. 6, for ease of description below, each second register in the second register group may be numbered, and the eight second registers are respectively numbered e0, e1, e2, e3, e4, e5, e6, and e7. Each storage location in each second register may be further numbered, and the eight storage locations in each second register are respectively numbered 0, 1, 2, 3, 4, 5, 6, and 7. Each storage location in the second register group may be initialized to 0. For ease of understanding polynomial calculation more intuitively in the following, the second registers in the second register group use a structure shown in FIG. 6. The second registers in the second register group may alternatively be arranged in another manner. This is not limited herein.

In a possible implementation, loading the M*N variable coefficients corresponding to the first polynomial to the second destination register group may be implemented by using the following step: loading an $i$th variable coefficient corresponding to an $m$th $N$th-degree polynomial in the M $N$th-degree polynomials to a (b+m)th storage location in a (b+i)th second register in the second destination register group, where m is an integer in [0, M-1], i is an integer in [0, N-1], and b is a nonnegative integer. In this embodiment of this application, because the second register group includes eight second registers, and each second register includes eight storage locations, a value of (b+i) is any integer in the range of [0, 7], and a value of (b+m) is any integer in the range of [0, 7].

For example, the first polynomial is $a_1x^1 + a_2x^2 + a_3x^3 + a_4x^4 + a_5x^5 + a_6x^6$, and three second-degree polynomials corresponding to the first polynomial are $a_1x^1 + a_2x^2$, $a_3x^1 + a_4x^2$, and $a_5x^1 + a_6x^2$. Variable coefficients corresponding to the three second-degree polynomials are $a_1$, $a_2$, $a_3$, $a_4$, $a_5$, and $a_6$.

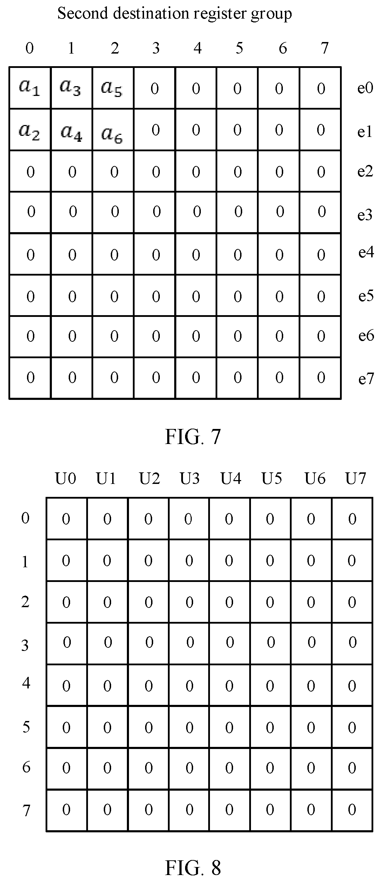

It is set that b=0. As shown in FIG. 7, variable coefficients corresponding to a 0th second-degree polynomial $a_1x^1 + a_2x^2$ are $a_1$ and $a_2$. In the 0th second-degree polynomial, a 0th variable coefficient is $a_1$, and a 1st variable coefficient is $a_2$. When m=0 and i=0, the 0th variable coefficient $a_1$ in the 0th second-degree polynomial is loaded to a 0th (0+0=0) storage location in a 0th (0+0=0) second register in the second destination register group. When m=0 and i=1, the 1st variable coefficient $a_2$ in the 0th second-degree polynomial is loaded to a 0th (0+0=0) storage location in a 1st (0+1=0) second register in the second destination register group. The 0th second register is the second register e0, and the 1st second register is the second register e1.

Variable coefficients corresponding to a 1st second-degree polynomial $a_3x^1 + a_4x^2$ are $a_3$ and $a_4$. In the 1st second-degree polynomial, a 0th variable coefficient is $a_3$, and a 1st variable coefficient is $a_4$. When m=1 and i=0, the 0th variable coefficient $a_3$ in the 1st second-degree polynomial is loaded to a 1st (0+1=1) storage location in the 0th (0+0=0) second register in the second destination register group. When m=1 and i=1, the 1st variable coefficient $a_4$ in the 1st second-degree polynomial is loaded to a 1st (0+1=1) storage location in the 1st (0+1=0) second register in the second destination register group. The 0th second register is the second register e0, and the 1st second register is the second register e1.

Variable coefficients corresponding to a 2nd second-degree polynomial $a_5x^1 + a_6x^2$ are $a_5$ and $a_6$. In the 2nd second-degree polynomial, a 0th variable coefficient is $a_5$, and a 1st variable coefficient is $a_6$. When m=2 and i=0, the 0th variable coefficient $a_5$ in the 2nd second-degree polynomial is loaded to a 2nd (0+2=0) storage location in the 0th (0+0=0) second register in the second destination register group. When m=2 and i=1, the 1st variable coefficient $a_6$ in the 2nd

second-degree polynomial is loaded to a $2^{nd}$ (0+2=2) storage location in the $1^{st}$ (0+1=0) second register in the second destination register group. The $0^{th}$ second register is the second register e0, and the $1^{st}$ second register is the second register e1.

In this embodiment of this application, the third register group includes a plurality of third registers, and each third register includes a plurality of storage locations. Generally, the third register group includes eight third registers. Each third register may store 512-bit data. It is set that each third register includes eight storage locations. Therefore, each storage location in the third register may store 64-bit data. The third register may be an SVE register.

As shown in FIG. 8, for ease of description in the following, each third register in the third register group may be numbered, and the eight third registers are respectively numbered U0, U1, U2, U3, U4, U5, U6, and U7. Each storage location in each third register may be further numbered, and the eight storage locations in each third register are respectively numbered 0, 1, 2, 3, 4, 5, 6, and 7. Each storage location in the third register group may be initialized to 0.

In a possible implementation, loading the M reference variables corresponding to the first polynomial to the third destination register group may be implemented by using the following step: loading an $m^{th}$ reference variable in the M reference variables to a $j^{th}$ storage location in a $(b+m)^{th}$ third register in the third destination register group, where m is an integer in [0, M-1], b is a nonnegative integer, and j is a nonnegative integer. In this embodiment of this application, because the third register group includes eight third registers, and each third register includes eight storage locations, a value of (b+m) is any integer in the range of [0, 7], and a value of j is any integer in the range of [0, 7].

For example, the first polynomial is $a_1x^1 + a_2x^2 + a_3x^3 + a_4x^4 + a_5x^5 + a_6x^6$, and three second-degree polynomials corresponding to the first polynomial are $a_1x^1 + a_2x^2$, $a_3x^1 + a_4x^2$, and $a_5x^1 + a_6x^2$. Three reference variables corresponding to the three second-degree polynomials are 1, $x^2$, and $x^4$.

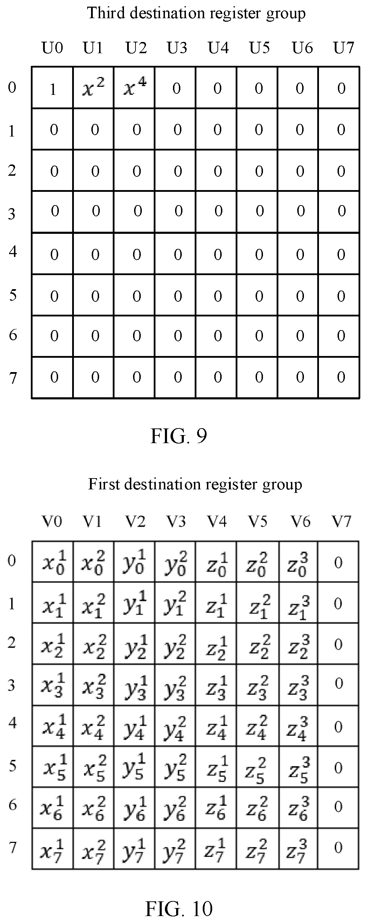

It is set that j=0 and b=0. As shown in FIG. 9, when m=0, a $0^{th}$ reference variable 1 is loaded to a $0^{th}$ storage location in a $0^{th}$ (0+0=0) third register in the third destination register group. The $0^{th}$ third register is the third register U0.

When m=1, a $1^{st}$ reference variable $x^2$ is loaded to a $0^{th}$ storage location in a $1^{st}$ (0+1=1) third register in the third destination register group. The $1^{st}$ third register is the third register U1.

When m=2, a $2^{nd}$ reference variable $x^4$ is loaded to a $0^{th}$ storage location in a $0^{th}$ (0+2=2) third register in the third destination register group. The $2^{nd}$ third register is the third register U2.

When a plurality of first polynomials are obtained, the foregoing manner may be used to determine N common variables, M*N variable coefficients, and M reference variables corresponding to each first polynomial, load the N common variables corresponding to each first polynomial to the first destination register group, load the M*N variable coefficients corresponding to each first polynomial to the second destination register group, and load the M reference variables corresponding to each first polynomial to the third destination register group.

24 first polynomials are used as an example for description, where a $0^{th}$ first polynomial to a $7^{th}$ first polynomial are:

$$a_1x_0^1 + a_2x_0^2 + a_3x_0^3 + a_4x_0^4 + a_5x_0^5 + a_6x_0^6$$

$$a_1x_1^1 + a_2x_1^2 + a_3x_1^3 + a_4x_1^4 + a_5x_1^5 + a_6x_1^6$$

$$a_1x_2^1 + a_2x_2^2 + a_3x_2^3 + a_4x_2^4 + a_5x_2^5 + a_6x_2^6$$

$$a_1x_3^1 + a_2x_3^2 + a_3x_3^3 + a_4x_3^4 + a_5x_3^5 + a_6x_3^6$$

$$a_1x_4^1 + a_2x_4^2 + a_3x_4^3 + a_4x_4^4 + a_5x_4^5 + a_6x_4^6$$

$$a_1x_5^1 + a_2x_5^2 + a_3x_5^3 + a_4x_5^4 + a_5x_5^5 + a_6x_5^6$$

$$a_1x_6^1 + a_2x_6^2 + a_3x_6^3 + a_4x_6^4 + a_5x_6^5 + a_6x_6^6$$

$$a_1x_7^1 + a_2x_7^2 + a_3x_7^3 + a_4x_7^4 + a_5x_7^5 + a_6x_7^6$$

$x_0$, $x_1$, $x_2$, $x_3$, $x_4$, $x_5$, $x_6$, and $x_7$ are basic variables with different values.

The $0^{th}$ first polynomial is used as an example for description. The $0^{th}$ first polynomial may be represented in the

following manner:

$$a_1 x_0^1 + a_2 x_0^2 + a_3 x_0^3 + a_4 x_0^4 + a_5 x_0^5 + a_6 x_0^6$$

$$= 1 * (a_1 x_0^1 + a_2 x_0^2) + x_0^2 * (a_3 x_0^1 + a_4 x_0^2) + x_0^4 * (a_5 x_0^1 + a_6 x_0^2)$$

The $0^{th}$ first polynomial includes three second-degree polynomials. Three reference variables corresponding to the three second-degree polynomials are 1, $x_0^2$ and $x_0^4$. Common variables included in each of the three second-degree polynomials are $x_0^1$ and $x_0^2$. Variable coefficients included in the three second-degree polynomials are $a_1$, $a_2$, $a_3$, $a_4$, $a_5$, and $a_6$.

A method for obtaining reference variables, common variables, and variable coefficients of the $1^{st}$ to the $7^{th}$ first polynomials is similar to a method for obtaining the reference variables, the common variables, and the variable coefficients of the $0^{th}$ first polynomial. Details are not described herein again.

An $8^{th}$ first polynomial to a $15^{th}$ first polynomial are:

$$b_1 y_0^1 + b_2 y_0^2 + b_3 y_0^3 + b_4 y_0^4$$

$$b_1 y_1^1 + b_2 y_1^2 + b_3 y_1^3 + b_4 y_1^4$$

$$b_1 y_2^1 + b_2 y_2^2 + b_3 y_2^3 + b_4 y_2^4$$

$$b_1 y_3^1 + b_2 y_3^2 + b_3 y_3^3 + b_4 y_3^4$$

$$b_1 y_4^1 + b_2 y_4^2 + b_3 y_4^3 + b_4 y_4^4$$

$$b_1 y_5^1 + b_2 y_5^2 + b_3 y_5^3 + b_4 y_5^4$$

$$b_1 y_6^1 + b_2 y_6^2 + b_3 y_6^3 + b_4 y_6^4$$

$$b_1 y_7^1 + b_2 y_7^2 + b_3 y_7^3 + b_4 y_7^4$$

$y_0$, $y_1$, $y_2$, $y_3$, $y_4$, $y_5$, $y_6$, and $y_7$ are basic variables with different values.

The $8^{th}$ first polynomial is used as an example for description. The $8^{th}$ first polynomial

$$b_1 y_0^1 + b_2 y_0^2 + b_3 y_0^3 + b_4 y_0^4$$

$$= 1 * (b_1 y_0^1 + b_2 y_0^2) + y_0^2 * (b_3 y_0^1 + b_4 y_0^2)$$

may be represented in the following manner:

The $8^{th}$ first polynomial includes two second-degree polynomials. Two reference variables corresponding to the two second-degree polynomials are 1 and $y_0^2$. Common variables included in each of the two second-degree polynomials are $y_0^1$ and $y_0^2$. Variable coefficients included in the two second-degree polynomials are $b_1$, $b_2$, $b_3$, and $b_4$.

A method for obtaining reference variables, common variables, and variable coefficients of the $9^{th}$ to the $15^{th}$ first polynomials is similar to a method for obtaining the reference variables, the common variables, and the variable coefficients of the $8^{th}$ first polynomial. Details are not described herein again.

A $16^{th}$ first polynomial to a $23^{rd}$ first polynomial are:

$$c_1 z_0^1 + c_2 z_0^2 + c_3 z_0^3 + c_4 z_0^4 + c_5 z_0^5 + c_6 z_0^6$$

$$c_1 z_1^1 + c_2 z_1^2 + c_3 z_1^3 + c_4 z_1^4 + c_5 z_1^5 + c_6 z_1^6$$

$$c_1 z_2^1 + c_2 z_2^2 + c_3 z_2^3 + c_4 z_2^4 + c_5 z_2^5 + c_6 z_2^6$$

$$c_1 z_3^1 + c_2 z_3^2 + c_3 z_3^3 + c_4 z_3^4 + c_5 z_3^5 + c_6 z_3^6$$

$$c_1 z_4^1 + c_2 z_4^2 + c_3 z_4^3 + c_4 z_4^4 + c_5 z_4^5 + c_6 z_4^6$$

$$c_1 z_5^1 + c_2 z_5^2 + c_3 z_5^3 + c_4 z_5^4 + c_5 z_5^5 + c_6 z_5^6$$

$$c_1 z_6^1 + c_2 z_6^2 + c_3 z_6^3 + c_4 z_6^4 + c_5 z_6^5 + c_6 z_6^6$$

$$c_1 z_7^1 + c_2 z_7^2 + c_3 z_7^3 + c_4 z_7^4 + c_5 z_7^5 + c_6 z_7^6$$

$z_0$, $z_1$, $z_2$, $z_3$, $z_4$, $z_5$, $z_6$, and $z_7$ are basic variables with different values.

The 16th first polynomial is used as an example for description. The 16th first polynomial may be represented in the following manner:

$$c_1 z_0^1 + c_2 z_0^2 + c_3 z_0^3 + c_4 z_0^4 + c_5 z_0^5 + c_6 z_0^6$$
$$= 1 * (c_1 z_0^1 + c_2 z_0^2 + c_3 z_0^3) + z_0^3 * (c_4 z_0^1 + c_5 z_0^2 + c_6 z_0^3)$$

The 16th first polynomial includes two third-degree polynomials. Two reference variables corresponding to the two third-degree polynomials are 1 and $z_0^3$. Common variables included in each of the two third-degree polynomials are $z_0^1$, $z_0^2$, and $z_0^3$. Variable coefficients included in the two third-degree polynomials are $c_1$, $c_2$, $c_3$, $c_4$, $c_5$, and $c_6$.

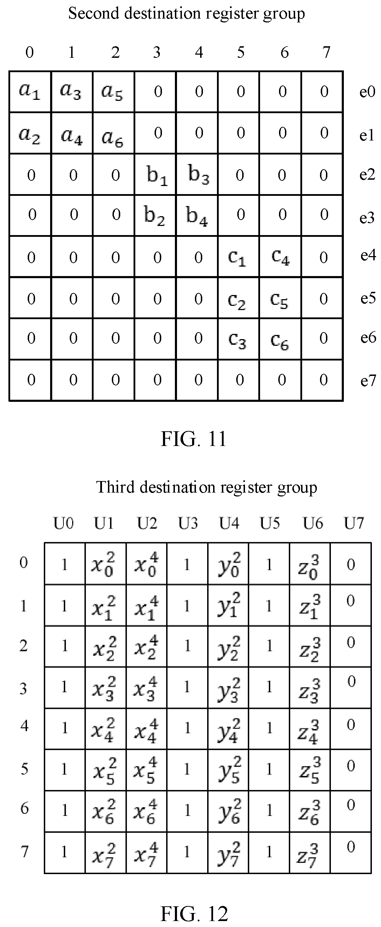

As shown in FIG. 10, the common variables corresponding to the 24 first polynomials are added to the first destination register group. As shown in FIG. 11, the variable coefficients corresponding to the 24 first polynomials are loaded to the second destination register group. As shown in FIG. 12, the reference variables corresponding to the 24 first polynomials are loaded to the third destination register group.

S205: Control outer product calculation to be performed on the common variable in the at least one first register group and the variable coefficient in the at least one second register group, to obtain a first result corresponding to each of the at least one to-be-calculated polynomial.

For the first polynomial in the at least one to-be-calculated polynomial, outer product calculation is controlled to be performed on the common variable in the first destination register group and the variable coefficient in the second destination register group, to obtain a first result corresponding to the first polynomial.

In this embodiment of this application, the first result corresponding to the first polynomial may be stored in a fourth destination register group. The fourth destination register group includes a plurality of fourth registers, and each fourth register includes a plurality of storage locations. Generally, a fourth register group includes eight fourth registers. Each fourth register may store 512-bit data. It is set that each fourth register includes eight storage locations. Therefore, each storage location in the fourth register may store 64-bit data. The fourth register may be an SVE register.

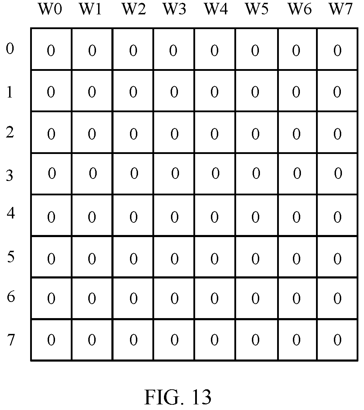

As shown in FIG. 13, for ease of description in the following, each fourth register in the fourth register group may be numbered, and the eight fourth registers are respectively numbered WO, W1, W2, W3, W4, W5, W6, and W7. Each storage location in each fourth register may be further numbered, and the eight storage locations in each fourth register are respectively numbered 0, 1, 2, 3, 4, 5, 6, and 7. Each storage location in the fourth register group may be initialized to 0.

Specifically, an mth first result in M first results corresponding to the first polynomial may be loaded to a jth storage location in a (b+m)th fourth destination register, where m is an integer in [0, M-1], b is a nonnegative integer, and j is a nonnegative integer. In this embodiment of this application, because the fourth register group includes eight fourth registers, and each fourth register includes eight storage locations, a value of (b+m) is any integer in the range of [0, 7], and a value of j is any integer in the range of [0, 7].

In a possible implementation, outer product calculation is performed on a $b^{th}$ storage location in each first register in the first destination register group and a $q^{th}$ storage location in each second register in the second destination register group, to obtain a first result corresponding to the first polynomial, where b is an integer in [0, 7], and q is an integer in [0, 7].

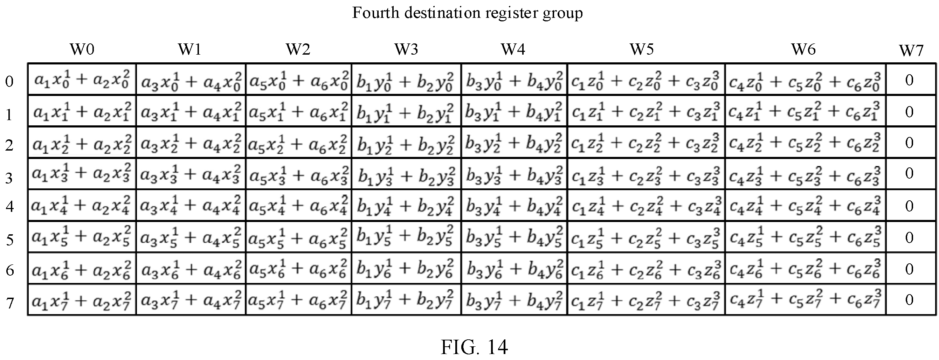

The foregoing 24 first polynomials are used for description. The common variables corresponding to the 24 first polynomials are stored in the first destination register group shown in FIG. 10, and the variable coefficients corresponding to the 24 first polynomials are stored in the second destination register group shown in FIG. 11. How to perform outer product calculation based on the common variables in the first destination register group and the variable coefficients in the second destination register group to obtain first results corresponding to the 24 first polynomials is described. The first results corresponding to the 24 first polynomials are stored in the fourth destination register group shown in FIG. 14.

Outer product calculation is performed on a $0^{th}$ storage location in each first register in the first destination register group and a $0^{th}$ storage location in each second register in the second destination register group, to obtain a first result $a_1 x_0^1 + a_2 x_0^2$, and the first result $a_1 x_0^1 + a_2 x_0^2$ is loaded to a $0^{th}$ storage location in the $0^{th}$ fourth destination register.

Outer product calculation is performed on the $0^{th}$ storage location in each first register in the first destination register group and a $1^{st}$ storage location in each second register in the second destination register group, to obtain a first result $a_3 x_0^1 + a_4 x_0^2$, and the first result $a_3 x_0^1 + a_4 x_0^2$ is loaded to a $0^{th}$ storage location in the $1^{st}$ fourth destination register.

Outer product calculation is performed on the $0^{th}$ storage location in each first register in the first destination register group and a $2^{nd}$ storage location in each second register in the second destination register group, to obtain a first result $a_5 x_0^1 + a_6 x_0^2$, and the first result $a_5 x_0^1 + a_6 x_0^2$ is loaded to a $0^{th}$ storage location in the $2^{nd}$ fourth destination register.

Outer product calculation is performed on the $0^{th}$ storage location in each first register in the first destination register group and a $3^{rd}$ storage location in each second register in the second destination register group, to obtain a first result $b_1 y_0^1 + b_2 y_0^2$, and the first result $b_1 y_0^1 + b_2 y_0^2$ is loaded to a $0^{th}$ storage location in the $3^{rd}$ fourth destination register.

Outer product calculation is performed on the $0^{th}$ storage location in each first register in the first destination register group and a $4^{th}$ storage location in each second register in the second destination register group, to obtain a first result $b_3 y_0^1 + b_4 y_0^2$, and the first result $b_3 y_0^1 + b_4 y_0^2$ is loaded to a $0^{th}$ storage location in the $4^{th}$ fourth destination register.

Outer product calculation is performed on the $0^{th}$ storage location in each first register in the first destination register group and a $5^{th}$ storage location in each second register in the second destination register group, to obtain a first result $c_1 z_0^1 + c_2 z_0^2 + c_3 z_0^3$, and the first result $c_1 z_0^1 + c_2 z_0^2 + c_3 z_0^3$ is loaded to a $0^{th}$ storage location in the $5^{th}$ fourth destination register.

Outer product calculation is performed on the $0^{th}$ storage location in each first register in the first destination register group and a $6^{th}$ storage location in each second register in the second destination register group, to obtain a first result $c_4 z_0^1 + c_5 z_0^2 + c_6 z_0^3$, and the first result $c_4 z_0^1 + c_5 z_0^2 + c_6 z_0^3$ is loaded to a $0^{th}$ storage location in the $6^{th}$ fourth destination register.

Outer product calculation is performed on the $0^{th}$ storage location in each first register in the first destination register group and a $7^{th}$ storage location in each second register in the second destination register group, to obtain a first result 0, and the first result 0 is loaded to a $0^{th}$ storage location in the $7^{th}$ fourth destination register.

The foregoing steps are repeated for a $1^{st}$ to a $7^{th}$ storage locations in each first register in the first destination register group. Details are not described herein.

S206: Control inner product calculation to be performed on the first result corresponding to each of the at least one to-be-calculated polynomial and the reference variable in the at least one third register group, to obtain a second result corresponding to each of the at least one to-be-calculated polynomial.

For the first polynomial in the at least one to-be-calculated polynomial, inner product calculation is controlled to be performed on the first result corresponding to the first polynomial and the reference variable in the third destination register group, to obtain a second result corresponding to the first polynomial.

In this embodiment of this application, the second result of the first polynomial may be stored in a fifth destination register group. The fifth destination register group includes a plurality of fifth registers, and each fifth register includes a plurality of storage locations. Generally, a fifth register group includes eight fifth registers. Each fifth register may store 512-bit data. It is set that each fifth register includes eight storage locations. Therefore, each storage location in the fifth register may store 64-bit data. The fifth register may be an SVE register.

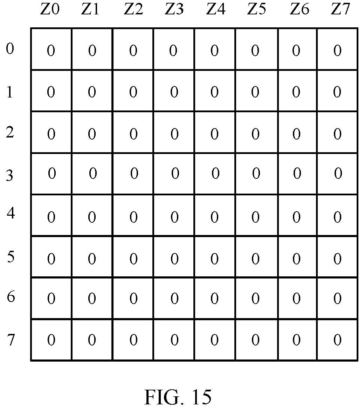

As shown in FIG. 15, for ease of description in the following, each fifth register in the fifth register group may be numbered, and the eight fifth registers are respectively numbered Z0, Z1, Z2, Z3, Z4, Z5, Z6, and Z7. Each storage location in each fifth register may be further numbered, and the eight storage locations in each fifth register are respectively numbered 0, 1, 2, 3, 4, 5, 6, and 7. Each storage location in the fifth register group may be initialized to 0.

It should be understood that before inner product calculation is performed, a number of first results corresponding to the first polynomial and a number of reference variables need to be determined. In this embodiment of this application, the number of first results corresponding to the first polynomial is M, and the number of reference variables is M. The number of first results corresponding to the first polynomial and the number of reference variables may be stored in a sixth destination register group before inner product calculation.

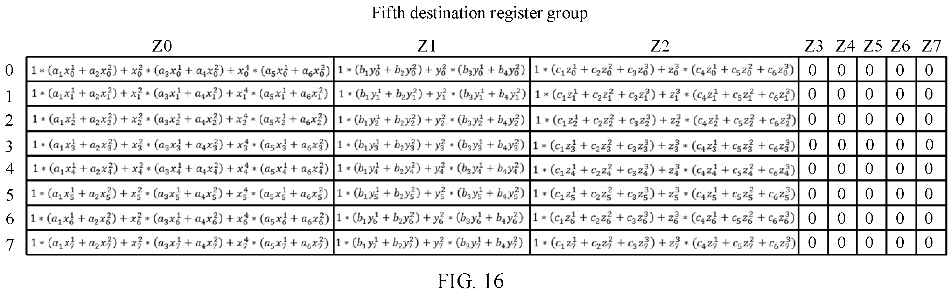

The third destination register group shown in FIG. 12 and the fourth destination register group shown in FIG. 14 are used as an example to describe how to perform inner product calculation on the first results in the fourth destination register group and the reference variables in the third destination register group, to obtain second results of the 24 first polynomials. The second results of the 24 first polynomials are stored in the fifth destination register group shown in FIG. 16.

It is determined that a number of first temporary values corresponding to the $0^{th}$ first polynomial is 3, and a number of reference variables is 3. Inner product calculation is performed on $0^{th}$ storage locations in fourth registers W0 to W2 in the fourth destination register group and $0^{th}$ storage locations in third registers U0 to U2 in the third destination register group, to obtain a second result $1 * (a_1 x_0^1 + a_2 x_0^2) + x^2 * (a_3 x_0^1 + a_4 x_0^2) + x^4 * (a_5 x_0^1 + a_6 x_0^2)$ of the first polynomial, and the second result $1 * (a_1 x_0^1 + a_2 x_0^2) + x^2 * (a_3 x_0^1 + a_4 x_0^2) + x^4 * (a_5 x_0^1 + a_6 x_0^2)$ of the first polynomial is loaded to a $0^{th}$ storage location in a $0^{th}$ fifth register in the fifth destination register group.

A process of calculating second results corresponding to the $1^{st}$ to the $7^{th}$ first polynomials is similar to a process of calculating the second result of the $0^{th}$ first polynomial, and details are not described herein.

It is determined that a number of first temporary values corresponding to the $8^{th}$ first polynomial is 2, and a number of reference variables is 2. Inner product calculation is performed on $0^{th}$ storage locations in fourth registers W3 and W4 in the fourth destination register group and $0^{th}$ storage locations in third registers U3 and U4 in the third destination register group, to obtain a second result $1 * (b_1 y_0^1 + b_2 y_0^2) + y_0^2 * (b_3 y_0^1 + b_4 y_0^2)$ of the first polynomial, and the second result $1 * (b_1 y_0^1 + b_2 y_0^2) + y_0^2 * (b_3 y_0^1 + b_4 y_0^2)$ of the first polynomial is loaded to a $0^{th}$ storage location in a $1^{st}$ fifth destination register in the fifth register group.

A process of calculating second results corresponding to the $9^{th}$ to the $15^{th}$ first polynomials is similar to a process of calculating the second result of the $8^{th}$ first polynomial, and details are not described herein.

It is determined that a number of first temporary values corresponding to the $16^{th}$ first polynomial is 2, and a number of reference variables is 2. Inner product calculation is performed on $0^{th}$ storage locations in fourth registers W5 and W6 in the fourth destination register group and $0^{th}$ storage locations in third registers U5 and U6 in the third destination register group, to obtain a second result $1 * (c_1 z_0^1 + c_2 z_0^2 + c_3 z_0^3) + z_0^3 * (c_4 z_0^1 + c_5 z_0^2 + c_6 z_0^3)$ of the first polynomial, and the second result $1 * (c_1 z_0^1 + c_2 z_0^2 + c_3 z_0^3) + z_0^3 * (c_4 z_0^1 + c_5 z_0^2 + c_6 z_0^3)$ of the first polynomial is loaded to a $0^{th}$ storage location in a $2^{nd}$ fifth register in the fifth destination register group.

A process of calculating second results corresponding to the $17^{th}$ to the $23^{rd}$ first polynomials is similar to a process of calculating the second result of the $16^{th}$ first polynomial, and details are not described herein.

When a large number of polynomials are calculated, according to the foregoing method, polynomial cyclic calculation may be converted into matrix calculation between register groups, improving a calculation speed.

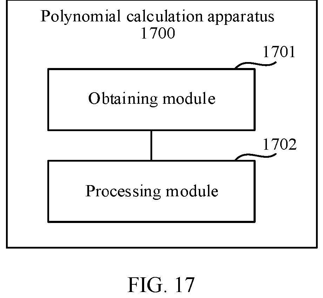

Based on a same inventive concept as the method embodiment, an embodiment of this application further provides a polynomial calculation apparatus. The apparatus is configured to perform the method in the method embodiment in FIG. 2. As shown in FIG. 17, the polynomial calculation apparatus 1700 includes an obtaining module 1701 and a processing module 1702. Specifically, in the polynomial calculation apparatus 1700, a connection is established between the modules through a communication path. In an application scenario, the storage 102 stores executable program code, and the processor 101 executes the executable program code to separately implement functions of the obtaining module 1701 and the processing module 1702, to implement the polynomial calculation method provided in this embodiment.

The obtaining module 1701 is configured to obtain a plurality of to-be-calculated polynomials in a polynomial calculation application.

The processing module 1702 is configured to: divide the plurality of to-be-calculated polynomials to obtain a plurality of to-be-calculated groups, where each to-be-calculated group includes at least one to-be-calculated polynomial, the at least one to-be-calculated polynomial in each to-be-calculated group is of a same type, the plurality of to-be-calculated groups include a first to-be-calculated group, and the first to-be-calculated group is any to-be-calculated group in the plurality of to-be-calculated groups; determine a respective common variable, a respective variable coefficient, and a respective reference variable that correspond to each of at least one to-be-calculated polynomial in the first to-be-calculated group, where the at least one to-be-calculated polynomial in the first to-be-calculated group corresponds to a same variable coefficient; load the respective common variable corresponding to each of the at least one to-be-calculated polynomial to at least one first register group, load the respective variable coefficient corresponding to each of the at least one to-be-calculated polynomial to at least one second register group, and load the respective reference variable corresponding to each of the at least one to-be-calculated polynomial to at least one third register group; control outer product calculation to be performed on the common variable in the at least one first register group and the variable coefficient in the at least one second register group, to obtain a first result corresponding to each of the at least one to-be-calculated polynomial; and control inner product calculation to be performed on the first result corresponding to each of the at least one to-be-calculated polynomial and the reference variable in the at least one third register group, to obtain a second result corresponding to each of the at least one to-be-calculated polynomial.

In a possible implementation, that the processing module 1702 determines the common variable, the variable coefficient, and the reference variable that correspond to the at least one to-be-calculated polynomial in the first to-be-calculated group may include: performing the following steps for a first polynomial in the at least one to-be-calculated polynomial, where the first polynomial is any polynomial in the at least one to-be-calculated polynomial: extracting, from the first polynomial, M $N^{th}$-degree polynomials and M reference variables corresponding to the M $N^{th}$-degree polynomials, where the M $N^{th}$-degree polynomials are in one-to-one correspondence with the M reference variables, each $N^{th}$-degree polynomial includes N common variables and N variable coefficients, the N common variables are in one-to-one correspondence with the N variable coefficients, the N common variables included in each of the M $N^{th}$-degree polynomials are the same as those included in another one in the M $N^{th}$-degree polynomials, M is a positive integer, and N is an integer greater than 1; and determining the N common variables and M*N variable coefficients based on the M $N^{th}$-degree polynomials.

In a possible implementation, before extracting, from the first polynomial, the M $N^{th}$-degree polynomials and the M reference variables corresponding to the M $N^{th}$-degree polynomials, the processing module 1702 is further configured to: when it is determined that degrees of monomials included in the first polynomial are non-consecutive, supplement the first polynomial with a monomial corresponding to a missing degree, where a variable coefficient of the monomial corresponding to the missing degree is zero.

In a possible implementation, before extracting, from the first polynomial, the M $N^{th}$-degree polynomials and the M reference variables corresponding to the M $N^{th}$-degree polynomials, the processing module 1702 is further configured to: when it is determined that a number of monomials included in the first polynomial is odd, supplement the first polynomial with an odd number of monomials, where variable coefficients of the odd number of monomials are all zero.

In a possible implementation, when extracting, from the first polynomial, the M $N^{th}$-degree polynomials and the M reference variables corresponding to the M $N^{th}$-degree polynomials, the processing module 1702 is specifically configured to: use every N monomials of adjacent degrees in the first polynomial as one second polynomial, to obtain M second polynomials; determine respective ratios of a $k^{th}$ variable included in each of the M second polynomials to a $k^{th}$ variable included in a second polynomial of a lowest degree, as M reference variables corresponding to the M second polynomials, where k is a nonnegative integer less than N; and determine ratios of each of the M second polynomials to the corresponding reference variables as the M $N^{th}$-degree polynomials.

In a possible implementation, that the processing module 1702 loads the respective common variable corresponding to each of the at least one to-be-calculated polynomial to the at least one first register group, loads the respective variable coefficient corresponding to each of the at least one to-be-calculated polynomial to the at least one second register group, and loads the respective reference variable corresponding to each of the at least one to-be-calculated polynomial to the at least one third register group may include: performing the following steps for the first polynomial in the at least one to-be-calculated polynomial, where the first polynomial is any polynomial in the at least one to-be-calculated polynomial: loading the N common variables corresponding to the first polynomial to a first destination register group, where the first destination register group is any one of the at least one first register group; loading the M*N variable coefficients corresponding to the first polynomial to a second destination register group, where the second destination register group is any one of the at least one second register group; and loading the M reference variables corresponding to the first polynomial to a third destination register group, where the third destination register group is any one of the at least one third register group.

In a possible implementation, the first destination register group includes a plurality of first registers, and each first register includes a plurality of storage locations. When loading the N common variables corresponding to the first polynomial to the first destination register group, the processing module 1702 is specifically configured to load an $i^{th}$ common variable in the N common variables to a $j^{th}$ storage location in a $(b+i)^{th}$ first register in the first destination register group, where i is an integer in [0, N-1], j is a nonnegative integer, and b is a nonnegative integer.

In a possible implementation, the second destination register group includes a plurality of second registers, and each second register includes a plurality of storage locations. When loading the M*N variable coefficients corresponding to the first polynomial to the second destination register group, the processing module 1702 is specifically configured to load an $i^{th}$ variable coefficient corresponding to an $m^{th}$ $N^{th}$-degree polynomial in the M $N^{th}$-degree polynomials to a $(b+m)^{th}$ storage location in a $(b+i)^{th}$ second register in the second destination register group, where m is an integer in [0, M-1], i is an integer in [0, N-1], and b is a nonnegative integer.

In a possible implementation, the third destination register group includes a plurality of third registers, and each third register includes a plurality of storage locations. When loading the M reference variables corresponding to the first polynomial to the third destination register group, the processing module 1702 is specifically configured to load an $m^{th}$ reference variable in the M reference variables to a $j^{th}$ storage location in a $(b+m)^{th}$ third register in the third destination register group, where m is an integer in [0, M-1], b is a nonnegative integer, and j is a nonnegative integer.

In a possible implementation, when controlling outer product calculation to be performed on the common variable in the at least one first register group and the variable coefficient in the at least one second register group, to obtain the first result corresponding to each of the at least one to-be-calculated polynomial, the processing module 1702 is specifically configured to perform the following step for the first polynomial in the at least one to-be-calculated polynomial, where the first polynomial is any polynomial in the at least one to-be-calculated polynomial: controlling outer product calculation to be performed on the common variable in the first destination register group and the variable coefficient in the second destination register group, to obtain a first result corresponding to the first polynomial.

In a possible implementation, when controlling inner product calculation to be performed on the first result corresponding to each of the at least one to-be-calculated polynomial and the reference variable in the at least one third register group, to obtain the second result corresponding to each of the at least one to-be-calculated polynomial, the processing module 1702 is specifically configured to perform the following step for the first polynomial in the at least one to-be-calculated polynomial, where the first polynomial is any polynomial in the at least one to-be-calculated polynomial: controlling inner product calculation to be performed on the first result corresponding to the first polynomial and the reference variable in the third destination register group, to obtain a second result corresponding to the first polynomial.

An embodiment of this application further provides a computer program product including instructions. The computer program product may be software or a program product that includes instructions and that can be run on a compute device or stored in any available medium. When the computer program product runs on at least one computer device, the at least one computer device is enabled to perform the method in the embodiment in FIG. 2. Refer to the foregoing related descriptions. Details are not described herein again.

An embodiment of this application further provide a computer-readable storage medium. The computer-readable storage medium may be any available medium that can be used for storage by a compute device, or a data storage device including one or more available media. The available medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct the compute device to perform the method performed in the embodiment in FIG. 2. Refer to the foregoing related descriptions. Details are not described herein again.

Optionally, the computer-executable instructions in this embodiment of this application may also be referred to as application code. This is not specifically limited in embodiments of this application.

A person of ordinary skill in the art may understand that various numbers such as first and second in this application are merely used for differentiation for ease of description, and are not used to limit the scope of embodiments of this application or represent a sequence. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one item (piece or type) of a, b, or c may indicate: a, b, c, a and b, a and c, b and c, or a, b, and c, where a, b, and c may be singular or plural. "A plurality of" means two or more, and another quantifier is similar to this. In addition, an element (element) that appears in singular forms "a", "an", and "the" does not mean "one or only one", but means "one or more", unless otherwise specified in the context. For example, "a device" means one or more such devices.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium that can be accessed by the computer, or a data storage device, such as a server or a data center, integrating one or more available media. The available medium may be a magnetic medium (for example, a floppy disk, a hard disk, or a magnetic tape), an optical medium (for example, a DVD), a semiconductor medium (for example, a solid state disk (Solid State Disk, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM storage, a flash memory, a ROM storage, an EPROM storage, an EEPROM storage, a register, a hard disk, a removable magnetic disk, a CD-ROM, or a storage medium of any other form in the art. For example, the storage medium may be connected to a processor, so that the processor may read information from the storage medium and write information to the storage medium. Optionally, the storage medium may alternatively be integrated into a processor. The processor and the storage medium may be disposed in an ASIC.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

**1.** A polynomial calculation method, wherein the method comprises:

obtaining a plurality of to-be-calculated polynomials in a polynomial calculation application;
dividing the plurality of to-be-calculated polynomials to obtain a plurality of to-be-calculated groups, wherein each to-be-calculated group comprises at least one to-be-calculated polynomial, the at least one to-be-calculated polynomial in each to-be-calculated group has a same variable coefficient, the plurality of to-be-calculated groups comprise a first to-be-calculated group, and the first to-be-calculated group is any to-be-calculated group in the plurality of to-be-calculated groups;
determining a respective common variable, a respective variable coefficient, and a respective reference variable that correspond to each of at least one to-be-calculated polynomial in the first to-be-calculated group;
loading the respective common variable corresponding to each of the at least one to-be-calculated polynomial to at least one first register group, loading the respective variable coefficient corresponding to each of the at least one to-be-calculated polynomial to at least one second register group, and loading the respective reference variable corresponding to each of the at least one to-be-calculated polynomial to at least one third register group;
controlling outer product calculation to be performed on the common variable in the at least one first register group and the variable coefficient in the at least one second register group, to obtain a first result corresponding to each of the at least one to-be-calculated polynomial; and

controlling inner product calculation to be performed on the first result corresponding to each of the at least one to-be-calculated polynomial and the reference variable in the at least one third register group, to obtain a second result corresponding to each of the at least one to-be-calculated polynomial.

2. The method according to claim 1, wherein the determining the respective common variable, the respective variable coefficient, and the respective reference variable that correspond to each of the at least one to-be-calculated polynomial in the first to-be-calculated group comprises:
performing the following steps for a first polynomial in the at least one to-be-calculated polynomial, wherein the first polynomial is any polynomial in the at least one to-be-calculated polynomial:

extracting, from the first polynomial, M $N^{th}$-degree polynomials and M reference variables corresponding to the M $N^{th}$-degree polynomials, wherein the M $N^{th}$-degree polynomials are in one-to-one correspondence with the M reference variables, each $N^{th}$-degree polynomial comprises N common variables and N variable coefficients, the N common variables are in one-to-one correspondence with the N variable coefficients, the N common variables comprised in each of the M $N^{th}$-degree polynomials are the same as those comprised in another one in the M $N^{th}$-degree polynomials, M is a positive integer, and N is an integer greater than 1; and
determining the N common variables and M*N variable coefficients based on the M $N^{th}$-degree polynomials.

3. The method according to claim 2, wherein before the extracting, from the first polynomial, the M $N^{th}$-degree polynomials and the M reference variables corresponding to the M $N^{th}$-degree polynomials, the method further comprises:
when it is determined that degrees of monomials comprised in the first polynomial are non-consecutive, supplementing the first polynomial with a monomial corresponding to a missing degree, wherein a variable coefficient of the monomial corresponding to the missing degree is zero.

4. The method according to claim 2 or 3, wherein before the extracting, from the first polynomial, the M $N^{th}$-degree polynomials and the M reference variables corresponding to the M $N^{th}$-degree polynomials, the method further comprises:
when it is determined that a number of monomials comprised in the first polynomial is odd, supplementing the first polynomial with an odd number of monomials, wherein variable coefficients of the odd number of monomials are all zero.

5. The method according to claim 2, wherein the extracting, from the first polynomial, the M $N^{th}$-degree polynomials and the M reference variables corresponding to the M $N^{th}$-degree polynomials comprises:

using every N monomials of adjacent degrees in the first polynomial as one second polynomial, to obtain M second polynomials;
determining respective ratios of a $k^{th}$ variable comprised in each of the M second polynomials to a $k^{th}$ variable comprised in a second polynomial of a lowest degree, as M reference variables corresponding to the M second polynomials, wherein k is a nonnegative integer less than N; and
determining ratios of each of the M second polynomials to the corresponding reference variables as the M $N^{th}$-degree polynomials.

6. The method according to claim 2, wherein the loading the respective common variable corresponding to each of the at least one to-be-calculated polynomial to the at least one first register group, loading the respective variable coefficient corresponding to each of the at least one to-be-calculated polynomial to the at least one second register group, and loading the respective reference variable corresponding to each of the at least one to-be-calculated polynomial to the at least one third register group comprises:
performing the following steps for the first polynomial in the at least one to-be-calculated polynomial, wherein the first polynomial is any polynomial in the at least one to-be-calculated polynomial:

loading the N common variables corresponding to the first polynomial to a first destination register group, wherein the first destination register group is any one of the at least one first register group;
loading the M*N variable coefficients corresponding to the first polynomial to a second destination register group, wherein the second destination register group is any one of the at least one second register group; and
loading the M reference variables corresponding to the first polynomial to a third destination register group, wherein the third destination register group is any one of the at least one third register group.

7. The method according to claim 6, wherein the first destination register group comprises a plurality of first registers, and each first register comprises a plurality of storage locations; and

the loading the N common variables corresponding to the first polynomial to the first destination register group comprises:
loading an $i^{th}$ common variable in the N common variables to a $j^{th}$ storage location in a $(b+i)^{th}$ first register in the first destination register group, wherein i is an integer in [0, N-1], j is a nonnegative integer, and b is a nonnegative integer.

8. The method according to claim 6 or 7, wherein the second destination register group comprises a plurality of second registers, and each second register comprises a plurality of storage locations; and

the loading the M*N variable coefficients corresponding to the first polynomial to the second destination register group comprises:
loading an $i^{th}$ variable coefficient corresponding to an $m^{th}$ $N^{th}$-degree polynomial in the M $N^{th}$-degree polynomials to a $(b+m)^{th}$ storage location in a $(b+i)^{th}$ second register in the second destination register group, wherein m is an integer in [0, M-1], i is an integer in [0, N-1], and b is a nonnegative integer.

9. The method according to any one of claims 6 to 8, wherein the third destination register group comprises a plurality of third registers, and each third register comprises a plurality of storage locations; and

the loading the M reference variables corresponding to the first polynomial to the third destination register group comprises:
loading an $m^{th}$ reference variable in the M reference variables to a $j^{th}$ storage location in a $(b+m)^{th}$ third register in the third destination register group, wherein m is an integer in [0, M-1], b is a nonnegative integer, and j is a nonnegative integer.

10. The method according to claim 6, wherein the controlling outer product calculation to be performed on the common variable in the at least one first register group and the variable coefficient in the at least one second register group, to obtain the first result corresponding to each of the at least one to-be-calculated polynomial comprises:

performing the following step for the first polynomial in the at least one to-be-calculated polynomial, wherein the first polynomial is any polynomial in the at least one to-be-calculated polynomial:
controlling outer product calculation to be performed on the common variable in the first destination register group and the variable coefficient in the second destination register group, to obtain a first result corresponding to the first polynomial.

11. The method according to claim 10, wherein the controlling inner product calculation to be performed on the first result corresponding to each of the at least one to-be-calculated polynomial and the reference variable in the at least one third register group, to obtain the second result corresponding to each of the at least one to-be-calculated polynomial comprises:

performing the following step for the first polynomial in the at least one to-be-calculated polynomial, wherein the first polynomial is any polynomial in the at least one to-be-calculated polynomial:
controlling inner product calculation to be performed on the first result corresponding to the first polynomial and the reference variable in the third destination register group, to obtain a second result corresponding to the first polynomial.

12. A polynomial calculation apparatus, wherein the polynomial calculation apparatus comprises an obtaining module and a processing module, wherein

the obtaining module is configured to obtain a plurality of to-be-calculated polynomials in a polynomial calculation application;
the processing module is configured to divide the plurality of to-be-calculated polynomials to obtain a plurality of to-be-calculated groups, wherein each to-be-calculated group comprises at least one to-be-calculated polynomial, the at least one to-be-calculated polynomial in each to-be-calculated group is of a same type, the plurality of to-be-calculated groups comprise a first to-be-calculated group, and the first to-be-calculated group is any to-be-calculated group in the plurality of to-be-calculated groups;
the processing module is further configured to determine a respective common variable, a respective variable coefficient, and a respective reference variable that correspond to each of at least one to-be-calculated polynomial in the first to-be-calculated group, wherein the at least one to-be-calculated polynomial in the first to-be-calculated group corresponds to a same variable coefficient;

the processing module is further configured to: load the respective common variable corresponding to each of the at least one to-be-calculated polynomial to at least one first register group, load the respective variable coefficient corresponding to each of the at least one to-be-calculated polynomial to at least one second register group, and load the respective reference variable corresponding to each of the at least one to-be-calculated polynomial to at least one third register group;

the processing module is further configured to control outer product calculation to be performed on the common variable in the at least one first register group and the variable coefficient in the at least one second register group, to obtain a first result corresponding to each of the at least one to-be-calculated polynomial; and

the processing module is further configured to control inner product calculation to be performed on the first result corresponding to each of the at least one to-be-calculated polynomial and the reference variable in the at least one third register group, to obtain a second result corresponding to each of the at least one to-be-calculated polynomial.

13. A compute device, wherein the apparatus comprises a processor and a storage, wherein

the storage is configured to store computer program instructions; and

the processor invokes the computer program instructions in the storage to perform the method according to any one of claims 1 to 11.

14. A computer-readable storage medium, wherein when the computer-readable storage medium is executed by a storage device, the storage device performs the method according to any one of claims 1 to 11.

```
┌──────────────────────────────────────────────────────────────────────────┐
│                                                                            │
│   ┌──────────────────┐                        ┌──────────────────────┐    │
│   │  Processor 101   │                        │    Communication     │    │
│   │                  │                        │    interface 104     │    │
│   └────────┬─────────┘                        └──────────┬───────────┘    │
│            │                                             │                 │
│   ◄────────┴─────────────────────┬──────────────────────┴──────────►      │
│      ╱                           │                                         │
│ Communication                    │                                         │
│   line 105          ┌────────────┴───────┐   ┌────────────────────────┐   │
│                     │    Storage 102     │   │    Matrix operator     │   │
│                     │                    │   │         106            │   │
│                     └────────────────────┘   └────────────────────────┘   │
│                                                                            │
│                                                   Compute device 100       │
└──────────────────────────────────────────────────────────────────────────┘
```

FIG. 1

```
                        ╭──────────────────╮
                        │      Start       │
                        ╰────────┬─────────╯
                                 ▼
┌──────────────────────────────────────────────────────────────┐
│ Obtain a plurality of to-be-calculated polynomials in a       │      S201
│ polynomial calculation application                            │
└──────────────────────────────────────────────────────────────┘
                                 ▼
┌──────────────────────────────────────────────────────────────┐
│ Divide the plurality of to-be-calculated polynomials to       │      S202
│ obtain a plurality of to-be-calculated groups                 │
└──────────────────────────────────────────────────────────────┘
                                 ▼
┌──────────────────────────────────────────────────────────────┐
│ Determine a respective common variable, a respective          │      S203
│ variable coefficient, and a respective reference variable     │
│ that correspond to each of at least one to-be-calculated      │
│ polynomial in a first to-be-calculated group                  │
└──────────────────────────────────────────────────────────────┘
                                 ▼
┌──────────────────────────────────────────────────────────────┐
│ Load the respective common variable corresponding to each     │
│ of the at least one to-be-calculated polynomial to at least   │
│ one first register group, load the respective variable        │      S204
│ coefficient corresponding to each of the at least one to-be-  │
│ calculated polynomial to at least one second register group,  │
│ and load the respective reference variable corresponding to   │
│ each of the at least one to-be-calculated polynomial to at    │
│ least one third register group                                │
└──────────────────────────────────────────────────────────────┘
                                 ▼
┌──────────────────────────────────────────────────────────────┐
│ Control outer product calculation to be performed on the      │
│ common variable in the at least one first register group and  │
│ the variable coefficient in the at least one second register  │      S205
│ group, to obtain a first result corresponding to each of the  │
│ at least one to-be-calculated polynomial                      │
└──────────────────────────────────────────────────────────────┘
                                 ▼
┌──────────────────────────────────────────────────────────────┐
│ Control inner product calculation to be performed on the      │
│ first result corresponding to each of the at least one to-be- │
│ calculated polynomial and the reference variable in the at    │      S206
│ least one third register group, to obtain a second result     │
│ corresponding to each of the at least one to-be-calculated    │
│ polynomial                                                    │
└──────────────────────────────────────────────────────────────┘
                                 ▼
                        ╭──────────────────╮
                        │       End        │
                        ╰──────────────────╯
```

FIG. 2

Start

Use every N monomials of adjacent orders in a first polynomial as one second polynomial, to obtain M second polynomials — S301

Determine respective ratios of a $k^{th}$ variable included in each of the M second polynomials to a $k^{th}$ variable included in a second polynomial of a lowest order as M reference variables corresponding to the M second polynomials — S302

Determine ratios of each of the M second polynomials to the corresponding reference variables as M $N^{th}$-degree polynomials — S303

End

FIG. 3

| | V0 | V1 | V2 | V3 | V4 | V5 | V6 | V7 |
|---|---|---|---|---|---|---|---|---|
| 0 | 0 | 0 | 0 | 0 | 0 | 0 | 0 | 0 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

FIG. 4

First destination register group

| | V0 | V1 | V2 | V3 | V4 | V5 | V6 | V7 |
|---|---|---|---|---|---|---|---|---|
| 0 | $x^1$ | $x^2$ | 0 | 0 | 0 | 0 | 0 | 0 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

FIG. 5

| 0 | 1 | 2 | 3 | 4 | 5 | 6 | 7 | |
|---|---|---|---|---|---|---|---|---|
| 0 | 0 | 0 | 0 | 0 | 0 | 0 | 0 | e0 |
| 0 | 0 | 0 | 0 | 0 | 0 | 0 | 0 | e1 |
| 0 | 0 | 0 | 0 | 0 | 0 | 0 | 0 | e2 |
| 0 | 0 | 0 | 0 | 0 | 0 | 0 | 0 | e3 |
| 0 | 0 | 0 | 0 | 0 | 0 | 0 | 0 | e4 |
| 0 | 0 | 0 | 0 | 0 | 0 | 0 | 0 | e5 |
| 0 | 0 | 0 | 0 | 0 | 0 | 0 | 0 | e6 |
| 0 | 0 | 0 | 0 | 0 | 0 | 0 | 0 | e7 |

FIG. 6

Second destination register group

| | 0 | 1 | 2 | 3 | 4 | 5 | 6 | 7 | |
|---|---|---|---|---|---|---|---|---|---|
| | $a_1$ | $a_3$ | $a_5$ | 0 | 0 | 0 | 0 | 0 | e0 |
| | $a_2$ | $a_4$ | $a_6$ | 0 | 0 | 0 | 0 | 0 | e1 |
| | 0 | 0 | 0 | 0 | 0 | 0 | 0 | 0 | e2 |
| | 0 | 0 | 0 | 0 | 0 | 0 | 0 | 0 | e3 |
| | 0 | 0 | 0 | 0 | 0 | 0 | 0 | 0 | e4 |
| | 0 | 0 | 0 | 0 | 0 | 0 | 0 | 0 | e5 |
| | 0 | 0 | 0 | 0 | 0 | 0 | 0 | 0 | e6 |
| | 0 | 0 | 0 | 0 | 0 | 0 | 0 | 0 | e7 |

FIG. 7

| | U0 | U1 | U2 | U3 | U4 | U5 | U6 | U7 |
|---|---|---|---|---|---|---|---|---|
| 0 | 0 | 0 | 0 | 0 | 0 | 0 | 0 | 0 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

FIG. 8

Third destination register group

|   | U0 | U1 | U2 | U3 | U4 | U5 | U6 | U7 |
|---|----|----|----|----|----|----|----|----|
| 0 | 1 | $x^2$ | $x^4$ | 0 | 0 | 0 | 0 | 0 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

FIG. 9

First destination register group

|   | V0 | V1 | V2 | V3 | V4 | V5 | V6 | V7 |
|---|----|----|----|----|----|----|----|----|
| 0 | $x_0^1$ | $x_0^2$ | $y_0^1$ | $y_0^2$ | $z_0^1$ | $z_0^2$ | $z_0^3$ | 0 |
| 1 | $x_1^1$ | $x_1^2$ | $y_1^1$ | $y_1^2$ | $z_1^1$ | $z_1^2$ | $z_1^3$ | 0 |
| 2 | $x_2^1$ | $x_2^2$ | $y_2^1$ | $y_2^2$ | $z_2^1$ | $z_2^2$ | $z_2^3$ | 0 |
| 3 | $x_3^1$ | $x_3^2$ | $y_3^1$ | $y_3^2$ | $z_3^1$ | $z_3^2$ | $z_3^3$ | 0 |
| 4 | $x_4^1$ | $x_4^2$ | $y_4^1$ | $y_4^2$ | $z_4^1$ | $z_4^2$ | $z_4^3$ | 0 |
| 5 | $x_5^1$ | $x_5^2$ | $y_5^1$ | $y_5^2$ | $z_5^1$ | $z_5^2$ | $z_5^3$ | 0 |
| 6 | $x_6^1$ | $x_6^2$ | $y_6^1$ | $y_6^2$ | $z_6^1$ | $z_6^2$ | $z_6^3$ | 0 |
| 7 | $x_7^1$ | $x_7^2$ | $y_7^1$ | $y_7^2$ | $z_7^1$ | $z_7^2$ | $z_7^3$ | 0 |

FIG. 10

Second destination register group

|  | 0 | 1 | 2 | 3 | 4 | 5 | 6 | 7 |  |
|---|---|---|---|---|---|---|---|---|---|
| | $a_1$ | $a_3$ | $a_5$ | 0 | 0 | 0 | 0 | 0 | e0 |
| | $a_2$ | $a_4$ | $a_6$ | 0 | 0 | 0 | 0 | 0 | e1 |
| | 0 | 0 | 0 | $b_1$ | $b_3$ | 0 | 0 | 0 | e2 |
| | 0 | 0 | 0 | $b_2$ | $b_4$ | 0 | 0 | 0 | e3 |
| | 0 | 0 | 0 | 0 | 0 | $c_1$ | $c_4$ | 0 | e4 |
| | 0 | 0 | 0 | 0 | 0 | $c_2$ | $c_5$ | 0 | e5 |
| | 0 | 0 | 0 | 0 | 0 | $c_3$ | $c_6$ | 0 | e6 |
| | 0 | 0 | 0 | 0 | 0 | 0 | 0 | 0 | e7 |

FIG. 11

Third destination register group

|  | U0 | U1 | U2 | U3 | U4 | U5 | U6 | U7 |
|---|---|---|---|---|---|---|---|---|
| 0 | 1 | $x_0^2$ | $x_0^4$ | 1 | $y_0^2$ | 1 | $z_0^3$ | 0 |
| 1 | 1 | $x_1^2$ | $x_1^4$ | 1 | $y_1^2$ | 1 | $z_1^3$ | 0 |
| 2 | 1 | $x_2^2$ | $x_2^4$ | 1 | $y_2^2$ | 1 | $z_2^3$ | 0 |
| 3 | 1 | $x_3^2$ | $x_3^4$ | 1 | $y_3^2$ | 1 | $z_3^3$ | 0 |
| 4 | 1 | $x_4^2$ | $x_4^4$ | 1 | $y_4^2$ | 1 | $z_4^3$ | 0 |
| 5 | 1 | $x_5^2$ | $x_5^4$ | 1 | $y_5^2$ | 1 | $z_5^3$ | 0 |
| 6 | 1 | $x_6^2$ | $x_6^4$ | 1 | $y_6^2$ | 1 | $z_6^3$ | 0 |
| 7 | 1 | $x_7^2$ | $x_7^4$ | 1 | $y_7^2$ | 1 | $z_7^3$ | 0 |

FIG. 12

|   | W0 | W1 | W2 | W3 | W4 | W5 | W6 | W7 |
|---|----|----|----|----|----|----|----|----|
| 0 | 0 | 0 | 0 | 0 | 0 | 0 | 0 | 0 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

FIG. 13

EP 4 782 986 A1

Fourth destination register group

| | W0 | W1 | W2 | W3 | W4 | W5 | W6 | W7 |
|---|---|---|---|---|---|---|---|---|
| 0 | $a_1 x_0^1 + a_2 x_0^2$ | $a_3 x_0^1 + a_4 x_0^2$ | $a_5 x_0^1 + a_6 x_0^2$ | $b_1 y_0^1 + b_2 y_0^2$ | $b_3 y_0^1 + b_4 y_0^2$ | $c_1 z_0^1 + c_2 z_0^2 + c_3 z_0^3$ | $c_4 z_0^1 + c_5 z_0^2 + c_6 z_0^3$ | 0 |
| 1 | $a_1 x_1^1 + a_2 x_1^2$ | $a_3 x_1^1 + a_4 x_1^2$ | $a_5 x_1^1 + a_6 x_1^2$ | $b_1 y_1^1 + b_2 y_1^2$ | $b_3 y_1^1 + b_4 y_1^2$ | $c_1 z_1^1 + c_2 z_1^2 + c_3 z_1^3$ | $c_4 z_1^1 + c_5 z_1^2 + c_6 z_1^3$ | 0 |
| 2 | $a_1 x_2^1 + a_2 x_2^2$ | $a_3 x_2^1 + a_4 x_2^2$ | $a_5 x_2^1 + a_6 x_2^2$ | $b_1 y_2^1 + b_2 y_2^2$ | $b_3 y_2^1 + b_4 y_2^2$ | $c_1 z_2^1 + c_2 z_2^2 + c_3 z_2^3$ | $c_4 z_2^1 + c_5 z_2^2 + c_6 z_2^3$ | 0 |
| 3 | $a_1 x_3^1 + a_2 x_3^2$ | $a_3 x_3^1 + a_4 x_3^2$ | $a_5 x_3^1 + a_6 x_3^2$ | $b_1 y_3^1 + b_2 y_3^2$ | $b_3 y_3^1 + b_4 y_3^2$ | $c_1 z_3^1 + c_2 z_3^2 + c_3 z_3^3$ | $c_4 z_3^1 + c_5 z_3^2 + c_6 z_3^3$ | 0 |
| 4 | $a_1 x_4^1 + a_2 x_4^2$ | $a_3 x_4^1 + a_4 x_4^2$ | $a_5 x_4^1 + a_6 x_4^2$ | $b_1 y_4^1 + b_2 y_4^2$ | $b_3 y_4^1 + b_4 y_4^2$ | $c_1 z_4^1 + c_2 z_4^2 + c_3 z_4^3$ | $c_4 z_4^1 + c_5 z_4^2 + c_6 z_4^3$ | 0 |
| 5 | $a_1 x_5^1 + a_2 x_5^2$ | $a_3 x_5^1 + a_4 x_5^2$ | $a_5 x_5^1 + a_6 x_5^2$ | $b_1 y_5^1 + b_2 y_5^2$ | $b_3 y_5^1 + b_4 y_5^2$ | $c_1 z_5^1 + c_2 z_5^2 + c_3 z_5^3$ | $c_4 z_5^1 + c_5 z_5^2 + c_6 z_5^3$ | 0 |
| 6 | $a_1 x_6^1 + a_2 x_6^2$ | $a_3 x_6^1 + a_4 x_6^2$ | $a_5 x_6^1 + a_6 x_6^2$ | $b_1 y_6^1 + b_2 y_6^2$ | $b_3 y_6^1 + b_4 y_6^2$ | $c_1 z_6^1 + c_2 z_6^2 + c_3 z_6^3$ | $c_4 z_6^1 + c_5 z_6^2 + c_6 z_6^3$ | 0 |
| 7 | $a_1 x_7^1 + a_2 x_7^2$ | $a_3 x_7^1 + a_4 x_7^2$ | $a_5 x_7^1 + a_6 x_7^2$ | $b_1 y_7^1 + b_2 y_7^2$ | $b_3 y_7^1 + b_4 y_7^2$ | $c_1 z_7^1 + c_2 z_7^2 + c_3 z_7^3$ | $c_4 z_7^1 + c_5 z_7^2 + c_6 z_7^3$ | 0 |

FIG. 14

|   | Z0 | Z1 | Z2 | Z3 | Z4 | Z5 | Z6 | Z7 |
|---|----|----|----|----|----|----|----|----|
| 0 | 0 | 0 | 0 | 0 | 0 | 0 | 0 | 0 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

FIG. 15

EP 4 782 986 A1

Fifth destination register group

| | Z0 | Z1 | Z2 | Z3 | Z4 | Z5 | Z6 | Z7 |
|---|---|---|---|---|---|---|---|---|
| 0 | $1 * (a_1 x_0^1 + a_2 x_0^2) + x_0^2 * (a_3 x_0^1 + a_4 x_0^2) + x_0^4 * (a_5 x_0^1 + a_6 x_0^2)$ | $1 * (b_1 y_0^1 + b_2 y_0^2) + y_0^2 * (b_3 y_0^1 + b_4 y_0^2)$ | $1 * (c_1 z_0^1 + c_2 z_0^2 + c_3 z_0^3) + z_0^3 * (c_4 z_0^1 + c_5 z_0^2 + c_6 z_0^3)$ | 0 | 0 | 0 | 0 | 0 |
| 1 | $1 * (a_1 x_1^1 + a_2 x_1^2) + x_1^2 * (a_3 x_1^1 + a_4 x_1^2) + x_1^4 * (a_5 x_1^1 + a_6 x_1^2)$ | $1 * (b_1 y_1^1 + b_2 y_1^2) + y_1^2 * (b_3 y_1^1 + b_4 y_1^2)$ | $1 * (c_1 z_1^1 + c_2 z_1^2 + c_3 z_1^3) + z_1^3 * (c_4 z_1^1 + c_5 z_1^2 + c_6 z_1^3)$ | 0 | 0 | 0 | 0 | 0 |
| 2 | $1 * (a_1 x_2^1 + a_2 x_2^2) + x_2^2 * (a_3 x_2^1 + a_4 x_2^2) + x_2^4 * (a_5 x_2^1 + a_6 x_2^2)$ | $1 * (b_1 y_2^1 + b_2 y_2^2) + y_2^2 * (b_3 y_2^1 + b_4 y_2^2)$ | $1 * (c_1 z_2^1 + c_2 z_2^2 + c_3 z_2^3) + z_2^3 * (c_4 z_2^1 + c_5 z_2^2 + c_6 z_2^3)$ | 0 | 0 | 0 | 0 | 0 |
| 3 | $1 * (a_1 x_3^1 + a_2 x_3^2) + x_3^2 * (a_3 x_3^1 + a_4 x_3^2) + x_3^4 * (a_5 x_3^1 + a_6 x_3^2)$ | $1 * (b_1 y_3^1 + b_2 y_3^2) + y_3^2 * (b_3 y_3^1 + b_4 y_3^2)$ | $1 * (c_1 z_3^1 + c_2 z_3^2 + c_3 z_3^3) + z_3^3 * (c_4 z_3^1 + c_5 z_3^2 + c_6 z_3^3)$ | 0 | 0 | 0 | 0 | 0 |
| 4 | $1 * (a_1 x_4^1 + a_2 x_4^2) + x_4^2 * (a_3 x_4^1 + a_4 x_4^2) + x_4^4 * (a_5 x_4^1 + a_6 x_4^2)$ | $1 * (b_1 y_4^1 + b_2 y_4^2) + y_4^2 * (b_3 y_4^1 + b_4 y_4^2)$ | $1 * (c_1 z_4^1 + c_2 z_4^2 + c_3 z_4^3) + z_4^3 * (c_4 z_4^1 + c_5 z_4^2 + c_6 z_4^3)$ | 0 | 0 | 0 | 0 | 0 |
| 5 | $1 * (a_1 x_5^1 + a_2 x_5^2) + x_5^2 * (a_3 x_5^1 + a_4 x_5^2) + x_5^4 * (a_5 x_5^1 + a_6 x_5^2)$ | $1 * (b_1 y_5^1 + b_2 y_5^2) + y_5^2 * (b_3 y_5^1 + b_4 y_5^2)$ | $1 * (c_1 z_5^1 + c_2 z_5^2 + c_3 z_5^3) + z_5^3 * (c_4 z_5^1 + c_5 z_5^2 + c_6 z_5^3)$ | 0 | 0 | 0 | 0 | 0 |
| 6 | $1 * (a_1 x_6^1 + a_2 x_6^2) + x_6^2 * (a_3 x_6^1 + a_4 x_6^2) + x_6^4 * (a_5 x_6^1 + a_6 x_6^2)$ | $1 * (b_1 y_6^1 + b_2 y_6^2) + y_6^2 * (b_3 y_6^1 + b_4 y_6^2)$ | $1 * (c_1 z_6^1 + c_2 z_6^2 + c_3 z_6^3) + z_6^3 * (c_4 z_6^1 + c_5 z_6^2 + c_6 z_6^3)$ | 0 | 0 | 0 | 0 | 0 |
| 7 | $1 * (a_1 x_7^1 + a_2 x_7^2) + x_7^2 * (a_3 x_7^1 + a_4 x_7^2) + x_7^4 * (a_5 x_7^1 + a_6 x_7^2)$ | $1 * (b_1 y_7^1 + b_2 y_7^2) + y_7^2 * (b_3 y_7^1 + b_4 y_7^2)$ | $1 * (c_1 z_7^1 + c_2 z_7^2 + c_3 z_7^3) + z_7^3 * (c_4 z_7^1 + c_5 z_7^2 + c_6 z_7^3)$ | 0 | 0 | 0 | 0 | 0 |

FIG. 16

Polynomial calculation apparatus
1700

1701

Obtaining module

1702

Processing module

FIG. 17

## INTERNATIONAL SEARCH REPORT

| International application No. |
| :--- |
| **PCT/CN2024/100201** |

| A. | CLASSIFICATION OF SUBJECT MATTER |
| :--- | :--- |

G06F7/523(2006.01)i

According to International Patent Classification (IPC) or to both national classification and IPC

| B. | FIELDS SEARCHED |
| :--- | :--- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 变量, 变量系数, 并行, 参考变量, 多个, 多项式, 公有变量, 共有变量, 寄存器, 寄存器组, 计算, 计算组, 内积, 外积, matrix, variable coefficient, outer product, coefficient?, polynomial?, calculat+, register?, inner product, group?, common variable

| C. | DOCUMENTS CONSIDERED TO BE RELEVANT |
| :--- | :--- |

| Category* | Citation of document, with indication, where appropriate, of the relevant passages | Relevant to claim No. |
| :---: | :--- | :---: |
| A | CN 114371828 A (HUAZHONG UNIVERSITY OF SCIENCE AND TECHNOLOGY) 19 April 2022 (2022-04-19)<br>description, paragraphs [0006]-[0082], and figures 1-7 | 1-14 |
| A | CN 114297571 A (ZHEJIANG UNIVERSITY) 08 April 2022 (2022-04-08)<br>entire document | 1-14 |
| A | CN 1855733 A (HUAWEI TECHNOLOGIES CO., LTD.) 01 November 2006 (2006-11-01)<br>entire document | 1-14 |
| A | US 2009248780 A1 (ARM LIMITED) 01 October 2009 (2009-10-01)<br>entire document | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| :--- | :--- | :--- | :--- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| :--- | :--- |
| **02 September 2024** | **05 September 2024** |

| Name and mailing address of the ISA/CN | Authorized officer |
| :--- | :--- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/100201**

| Patent document cited in search report | | | Publication date (day/month/year) | Patent family member(s) | | | Publication date (day/month/year) |
|---|---|---|---|---|---|---|---|
| CN | 114371828 | A | 19 April 2022 | None | | | |
| CN | 114297571 | A | 08 April 2022 | None | | | |
| CN | 1855733 | A | 01 November 2006 | None | | | |
| US | 2009248780 | A1 | 01 October 2009 | TW | 200945062 | A | 01 November 2009 |
| | | | | WO | 2009118500 | A1 | 01 October 2009 |
| | | | | GB | 0805491 | D0 | 30 April 2008 |
| | | | | GB | 2458665 | A | 30 September 2009 |
| | | | | GB | 2458665 | B | 07 March 2012 |
| | | | | US | 8700688 | B2 | 15 April 2014 |
| | | | | ATE | 521936 | T1 | 15 September 2011 |
| | | | | EP | 2255279 | A1 | 01 December 2010 |
| | | | | EP | 2255279 | B1 | 24 August 2011 |
| | | | | MY | 158872 | A | 30 November 2016 |
| | | | | IL | 207633 | A0 | 30 December 2010 |
| | | | | KR | 20100139072 | A | 31 December 2010 |
| | | | | JP | 2011517496 | A | 09 June 2011 |
| | | | | JP | 5193358 | B2 | 08 May 2013 |

Form PCT/ISA/210 (patent family annex) (July 2022)

**EP 4 782 986 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311323154X